Europäisches Patentamt

European Patent Office

Office européen des brevets

(11) Publication number: **0 516 265 A1**

## (12) EUROPEAN PATENT APPLICATION

(21) Application number: **92301906.1**

(22) Date of filing: **05.03.92**

(51) Int. Cl.⁵: **G01S 1/56, G01S 1/02**

(30) Priority: **09.05.91 GB 9110040**
**02.07.91 GB 9114315**

(43) Date of publication of application:
**02.12.92 Bulletin 92/49**

(84) Designated Contracting States:
**AT BE CH DE DK ES FR GR IT LI LU NL SE**

(71) Applicant: **Siemens Plessey Electronic**
**Systems Limited**
**Oakcroft Road**
**Chessington, Surrey KT9 1OZ(GB)**

(72) Inventor: **Smart, Peter Britton**
**20 Sydney Close**
**Newport, Isle of Wight(GB)**
Inventor: **Spencer, Timothy James**
**139 Castle Road**
**Newport, Isle of Wight(GB)**
Inventor: **Sole, John David**

**32 Bell Vue Road**
**Cowes, Isle of Wight(GB)**
Inventor: **Barton, Peter William**
**12 Mountbatten Drive**
**Newport, Isle of Wight(GB)**
Inventor: **Peckham, Richard**
**Packways, Galley Lane, Brighstone**
**Newport, Isle of Wight(GB)**
Inventor: **Graham, William Morris**
**128 Baring Road**
**Cowes, Isle of Wight(GB)**
Inventor: **Whitehurst, Jonathan**
**45 The Mall**
**Newport, Isle of Wight(GB)**

(74) Representative: **Allen, Derek**
**Siemens Group Services Limited,**
**Intellectual Property Department, Roke**
**Manor, Old Salisbury Lane**
**Romsey, Hampshire SO51 0ZN(GB)**

(54) Improvements in or relating to aircraft landing systems.

(57) An aircraft landing system (10) is disclosed which produces electromagnetic guidance signals to an incoming aircraft (14) and which allow the incoming aircraft (14) to safely land upon the runway (16). This system (10) includes various antenna arrays (12, 18), and (20) which are orientated so as to provide signals in several directions. Each of these arrays has a separate controller (22, 24), and (26) having a separate transmitter controller (74) uniquely coupled to each of the antennas (80, 88). Each of the transmitter controllers (74) separately amplifies the incoming electromagnetic energy from transmitters (52, 54). System 10 further includes several fault monitors (92, 94, 96) which monitor the operation of system (10) and which further provide self test features. System (10) further includes voting circuitry (98, 118) to allow for continued system operation even upon the failure of one or more of the transmitter controllers (74) and/or the monitors (92, 94, 96) and a dual inclined travelling wave manifold (90) and (566) to provide a monitored beam output which is used by monitors (92, 94, 96) to ensure continued system operation. Further, system 10 includes a connectorless coupling of electromagnetic energy between each of the transmitter controllers (74) and the combiners (82, 84). This connectorless coupling allows for a more efficient energy transfer while obviating the need for separate physical connections which are inherently unreliable; inefficient; and costly.

Fig.2.

## 1. **Field of the Invention**

This invention relates to aircraft landing systems and more particularly, to an aircraft landing system which generates microwave radiation which is received by an aircraft and used to safely land the aircraft upon a runway.

## 2. **Discussion**

Microwave aircraft landing systems are employed at many airports and are used to generate microwave guidance radiation which is used by an incoming aircraft to guide the aircraft's descent and landing. This radiation normally comprises scanning beams of electromagnetic energy which are radiated, by separate antenna arrays, in each of the azimuth and elevational directions with respect to the incoming aircraft. In some embodiments, a third antenna array is employed to generate a scanning beam of energy which is orientated in an opposite azimuth direction from that of the first azimuth array. This third antenna array is oftentimes referred to as "back azimuth" array and its radiated energy is used to guide the aircraft as the aircraft passes over the runway or aborts its landing. The electromagnetic energy, radiated by these arrays, is normally generated by a single transmitter and coupled, by a physical connector arrangement, to the individual arrays. In some of these embodiments, a second transmitter is employed and is selectively coupled to these arrays upon a failure of the main transmitter. Such selective coupling allows the system to operate upon a failure of the main transmitter.

Many of these prior landing systems also include several antenna manifolds which are each coupled to a unique one of these arrays and which are each adapted to output a single ray, of the monitored scanning beam, uniquely corresponding to a given scan angle relative to the center of the monitored array. These sampled rays are used to ensure the continued accuracy and presence of the individual scanning beams. Additionally, many of these prior systems employ a single fault monitor device which is adapted to detect component failures and to either correct for these failures or to deactivate all or part of the system in order to prevent the generation of faulty guidance radiation.

One of the disadvantages of many of these prior landing systems has been their unreliability due to frequent component failure and their frequent deactivation, by the system fault monitor, due to a false recognition of a component or system failure. Further disadvantages include the use of multiple and relatively high power transmitters in combination with an active (i.e. energy consuming) and relatively high power function switch which is used to allow the secondary transmitter to be utilized upon the failure of the primary transmitter and to selectively couple the generated energy to the various arrayed antennas. This arrangement, in addition to being relatively inefficient, also represents a single point of system failure (i.e. failure of the switch causes total system deactivation) and further contributes to the overall unreliability of these prior systems.

Additional disadvantages of these past systems includes the inefficient coupling of energy from the transmitter to each of the antennas, due to the use of a plethora of mechanical connectors adapted to couple energy between these entities; the distortion of the radiated scanning beams due to precipitation; the failure to correct for variations in the scan angle, associated with the monitored ray, caused by changes in temperature and frequency; and the failure to correctly cause a phase shift of each of the radiated rays in order to allow for the radiation of the desired scanning beams.

## SUMMARY OF THE INVENTION

A first object of this invention is to provide an aircraft landing system for generating and radiating microwave guidance radiation comprising scanning beams of energy which are directed in either an elevation or an azimuth direction with respect to an incoming aircraft.

It is another object of this invention to provide an aircraft landing system having multiple and relatively low powered transmitters which are normally sequentially and alternatively operated so as to ensure continued system operation upon the failure of a single one of these transmitters and to allow the existence of a transmitter fault to be determined relatively quickly after its occurrence.

It is a further object of this invention to uniquely associate each of the antenna elements, of the aircraft landing system of this invention, with a separate and unique transmitter controller which amplifies and programmably shifts the phase of the output signal of one of the system transmitters while coupling this amplified and phase shifted output signal to the antenna to which the controller is uniquely associated with.

It is yet a further object of this invention to provide a microwave landing system having several fault monitors which are each adapted to independently monitor the performance of various portions of the system in order to ascertain the existence of a system fault and to deactivate the faulty portion of the system in order to substantially prevent the radiation of faulty guidance radiation.

It is yet another object of this invention to provide a voting circuit arrangement which is coupled to the output of each of the system fault monitors and which allows the system, or a portion of the system, to be deactivated only upon the generation of a fault indication signal by several of these monitors, thereby decreasing the probability of system deactivation due to the generation of a false fault output signal by a single one of these monitors.

It is a further object of this invention to provide an aircraft landing system which includes an automatic integrity apparatus which periodically tests the system fault monitors in order to ascertain the operational readiness of these monitors.

It is yet a further object of this invention to provide a fault detection apparatus which is effective to periodically test the automatic integrity apparatus and those portions of the system which are not normally tested by the automatic integrity apparatus.

It is yet another object of this invention to provide for a connectorless coupling of generated energy, to and from each of the transmitter controllers, in order to increase the efficiency of this energy transfer.

It is a further object of this invention to provide a curved radome which is adapted to be coupled to each of the antennas comprising an array and which is effective to both substantially prevent the radiated beams of electromagnetic energy from being distorted due to precipitation and to allow each of the constituent rays to pass therethrough without substantial distortion.

It is yet a further object of this invention to provide a monitoring manifold arrangement which is adapted to monitor a portion of a scanning beam, uniquely corresponding to a desired scan angle, and which allows this portion to be continually monitored despite changes in ambient temperature or frequency of the scanning beam.

According to the teachings of the present invention an aircraft landing system is provided which includes a first and a second antenna; a transmitter having an energy output signal associated therewith; a first transmitter controller having an input receivably coupled to the output signal of the transmitter and being effective to amplify and shift the phase of the received transmitter signal and to couple the amplified and phase shifted signal to the first antenna; and a second transmitter controller having an input receivably coupled to the output signal of the transmitter and being effective to amplify and shift the phase of the received transmitter signal and to couple the amplified and phase shifted signal to the second antenna.

Further objects, features and advantages of the invention will become apparent from consideration of the following description and the appended claims when taken in conjunction with the accompanying drawings.

## BRIEF DESCRIPTION OF THE DRAWINGS

Various advantages of the present invention will become apparent to those skilled in the art by reading the following specification and by reference to the following drawings in which:

Figure 1 is a block diagram of the aircraft landing system of a first embodiment of this invention;

Figure 2 is a block diagram of the approach azimuth controller of the first embodiment of this invention, which is generally shown in Figure 1;

Figure 3 is a schematic diagram of the voting apparatus of the first embodiment of this invention, which is generally shown in Figure 2;

Figure 4 is a block diagram of the transmitter controller of the first embodiment of this invention, which is generally shown in Figure 2;

Figure 5 is a block diagram of the transmitter module microwave circuit of the first embodiment of this invention, which is generally shown in Figure 4;

Figure 6 is a block diagram of the transmitter control processor of the first embodiment of this invention, which is generally shown in Figure 4;

Figure 7 is a partial perspective view of the transmitter controller of the first embodiment of this invention, which is generally shown in Figures 2 and 4;

Figure 8 is a side view of the transmitter controller of the first embodiment of this invention, taken along line 8-8 of Figure 7 and further showing the transmitter controller in coupling relation to one of the splitters, shown in Figure 1, according to a first coupling arrangement;

Figure 9 is a plan view of the transmitter controller which is shown in Figure 8, taken in the direction of arrow 9 of Figure 7;

Figure 10 is a side view of the transmitter controller of the first embodiment of this invention, taken along line 8-8 of Figure 7 and showing the transmitter controller in coupling relation to one of the splitters, shown in Figure 1, according to a second coupling arrangement;

Figure 11 is a plan view of the transmitter controller which is shown in Figure 10, taken in the direction of arrow 9 of Figure 7;

Figure 12 is a side view of the transmitter controller of the first embodiment of this invention, taken along line 8-8 of Figure 7 and showing the transmitter controller in coupling relation to one of the splitters, shown in Figure 1, according to a third coupling arrangement;

Figure 13 is a plan view of the transmitter controller which is shown in Figure 12, taken in the direction of arrow 9 of Figure 7;

Figure 14 is a side view of the transmitter controller of the first embodiment of this invention, taken along line A-A' of Figure 7 and showing the transmitter controller in coupling relation to one of the splitters, shown in Figure 1, according to a fourth coupling arrangement;

Figure 15 is a plan view of the transmitter controller which is shown in Figure 14, taken in the direction of arrow 9 of Figure 7;

Figure 16(a) is a fragmented front view of the traveling waveguide manifold of the first embodiment of this invention, shown in assembled relation with several waveguide radiators; Figure 16-(b) is a cross sectional view of the manifold-waveguide assembly of Figure 16(a) taken along line 16-B-16B of Figure 16(a).

Figure 17 is a fragmented front view of a traveling waveguide manifold assembly made in accordance with a second embodiment of this invention and shown in assembled relation with several waveguide radiators;

Figure 18 is a flow chart generally illustrating the sequence of operations performed by the transmitter control processor of the first embodiment of this invention, which is shown in Figure 6;

Figure 19 is a flow chart illustrating the sequence of operations performed by the transmitter control processor, of the first embodiment of this invention, during the transmission of preamble data;

Figures 20(a-b) are flow charts illustrating the sequence of operations performed by the transmitter control processor, of the first embodiment of this invention, during the radiation of "out of coverage" energy;

Figures 21(a-b) are flow charts illustrating the sequence of operations performed by the transmitter control processor, of the first embodiment of this invention, during the radiation of scanning guidance beams of radiation;

Figure 22 is a block diagram of one of the transmitters, of the first embodiment of this invention, which are generally shown in Figure 2;

Figure 23 is a flow chart illustrating the sequence of operations performed by the transmitter shown in Figure 22;

Figure 24 is a block diagram of one of the fault monitors of the first embodiment of this invention, which is generally shown in Figure 2;

Figure 25 is a block diagram of the control and status module of the first embodiment of this invention, which is generally shown in Figure 2;

Figure 26 is a flow chart illustrating the sequence of operations performed by the automatic integrity apparatus, of the first embodiment of this invention, which is shown generally in Figure 24;

Figure 27 is a flow chart illustrating the sequence of operations associated with the "end to end" testing sequence associated with the first embodiment of this invention;

Figure 28 is a side view of a radome made in accordance with the teachings of the first embodiment of this invention and shown in assembled relation with several antennas;

Figure 29 is a view of the radome, of the first embodiment of this invention, taken along line 29-29 of Figure 28;

Figure 30 is a block diagram of an aircraft landing system made according to the teachings of a second embodiment of this invention;

Figure 31 is a block diagram of an aircraft landing system made according to the teachings of a third embodiment of this invention;

Figure 32 is a block diagram of an aircraft landing system made according to the teachings of a fourth embodiment of this invention;

Figure 33 is a block diagram of one of the transmitters of the fourth embodiment of this invention, which is generally shown in Figure 32;

Figure 34 is a block diagram of one of the fault monitors of the fourth embodiment of this invention, which is generally shown in Figure 32;

Figure 35 is a block diagram illustrating the communication linkage between the elevation, back azimuth, and approach azimuth controllers according to the teachings of the first embodiment of this invention; and

Figure 36 is an illustration of the spatial and phase distribution of two constituent rays of a scanning beam of radiation.

## DETAILED DESCRIPTION OF THE INVENTION

This description is segmented into the following sectional areas:

(I). General System Architecture

(II). Travelling Wave Manifold

(III). Connectorless Energy Coupling

(I). General System Architecture

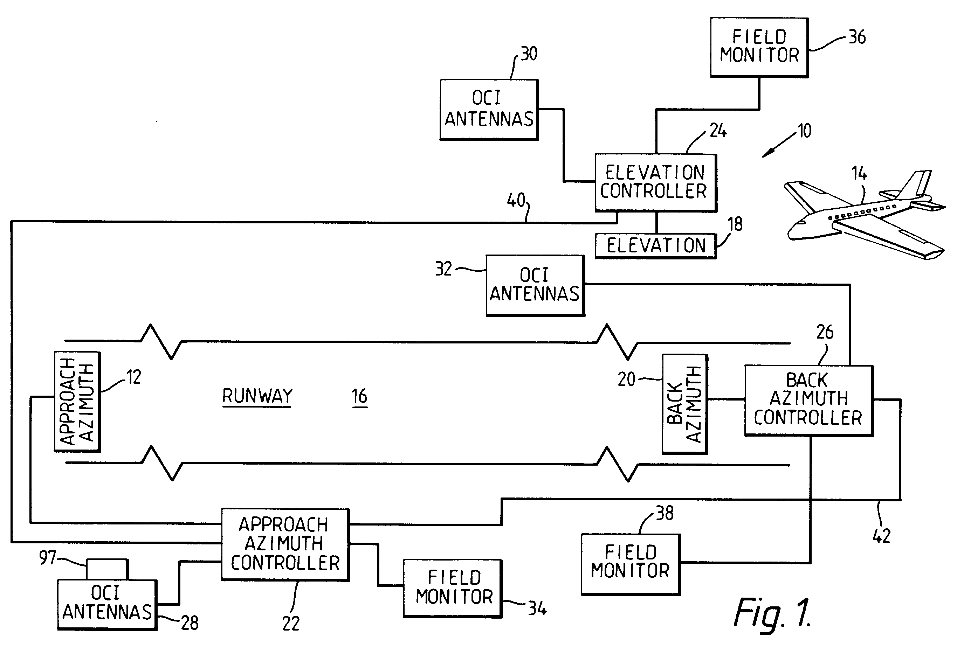

Referring now to Figure 1 there is shown an aircraft landing system 10 of a first embodiment of this invention and including an approach azimuth antenna array 12 which radiates a scanning beam of energy in the azimuth direction towards the incoming aircraft 14. This energy beam, comprising several constituent rays, is received by aircraft 14 and is used to guide the aircraft 14 to a safe landing upon runway 16.

Additionally, system 10 includes an elevation antenna array 18 and a back azimuth antenna array 20 which respectively generate scanning beams of energy in the elevational direction towards the incoming aircraft 14 and in the azimuth direction away from the incoming aircraft 14. With this scanning beam deployment, aircraft 14 will receive guidance radiation in both the elevational and azimuth directions as it approaches the runway 16 and, should it abort landing, will continue to receive guidance radiation from back azimuth array 20 as it passes over runway 16.

Arrays 12, 18, and 20 are coupled to respective array controllers 22, 24, and 26 which generate the electromagnetic energy which is eventually radiated by each of the respective arrays 12, 18, and 20. These controllers 22, 24, and 26 further define the characteristics of the individual radiated scanning beams, monitor their own individual operation, and, based upon this monitoring, deactivate faulty controller portions which may result in the suppression of the previously generated radiation.

Controllers 22, 24, and 26 are further respectively coupled to "out of coverage" (i.e. "OCI") antenna arrays 28, 30, and 32 and to respective field monitor antennas 34, 36, and 38. In practice, controllers 22, 24, and 26 selectively couple energy to arrays 28, 30, and 32 in order to allow this coupled energy to be eventually radiated at precise spatial regions in close proximity to runway 16. That is, these arrays 28, 30, and 32 are normally arranged so that their radiated energy suppresses any energy, originally emanating from arrays 12, 18, or 20, which is reflected from an object close to runway 16. Such unsuppressed reflected energy could be received by aircraft 14 and construed as a guidance signal. This "false" guidance signal could cause aircraft 14 to crash or to collide with a second incoming aircraft (not shown) since aircraft 14 would be on an incorrect approach course. The radiating orientation of arrays 28, 30, and 32 is therefore normally defined only after a thorough study is made of the various possible reflective objects present near the runway 16 and of the characteristics of the possible reflective radiation caused by these objects.

Field monitor antennas 34, 36, and 38 receive a portion of the energy radiated from the respective arrays 12, 18, and 20 and couple this received energy, in a manner and for a purpose which will be discussed, to respective controllers 22, 24, and 26 in order to allow these controllers 22, 24, and 26 to determine the operating performance of system 10.

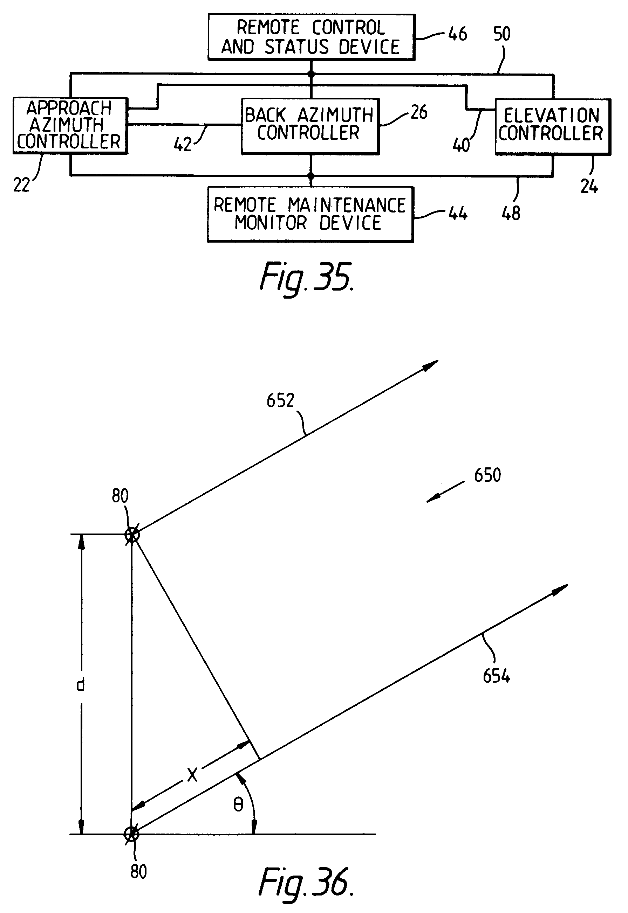

According to the first embodiment of the invention, (as shown in Figure 35) controller 22 generates synchronization signals to both of the controllers 24 and 26 by means of respective communications links 40 and 42. In this arrangement, controller 22 is adapted to function as a "master station" and controllers 24 and 26 are adapted to function as "slave stations" since the operation of controllers 24 and 26 is dependent upon receipt of synchronization signals from controller 22. The generation and use of such synchronization signals will be explained later. After such "master" synchronization signals are received by controllers 24 and 26, individual synchronization acknowledgements signals are transmitted, by controllers 24 and 26 along respective busses 40 and 42, to controller 22 in order to allow controller 22 to ensure proper receipt of the "master" synchronization signals. The generation and use of such synchronization signal acknowledgements will be later explained in more detail.

As also shown in Figure 35, a remote maintenance monitor device 44 is normally employed by system 10 and is adapted to receive operational system data, from controllers 22, 24, and 26, in order to allow a remote user of system 10 to monitor system performance. Further, a remote control and status device 46 is also normally employed, within system 10, to remotely monitor and control various parameters of system 10, in a manner and of a type which will be later discussed. Device 46, in this first embodiment, is normally placed within a typical airport control tower (not shown) and is used by an airport controller to periodically ascertain the operational readiness of the system 10 and to remotely modify system 10 in response to changing needs and/or fault conditions.

Each of the devices 44 and 46 may, in practice, be coupled to links 40 and 42 although, in the first embodiment of this invention, it is preferred that they be separately coupled to controllers 22, 24, and 26 by respective communications links 48 and 50. This separate coupling is desirable since the information communicated by means of links 40 and 42 effects the integrity or actual operation of system 10, in contrast to the information communicated on links 48 and 50, which does not. This separation therefore decreases the probability of system disruption caused by a failure of the communications links associated with the remote monitoring and control activities. It should also be realized, by one of ordinary skill in the art, that links 40 and 42 may be replaced by a single communications link without a concomitant increase in system fault probability.

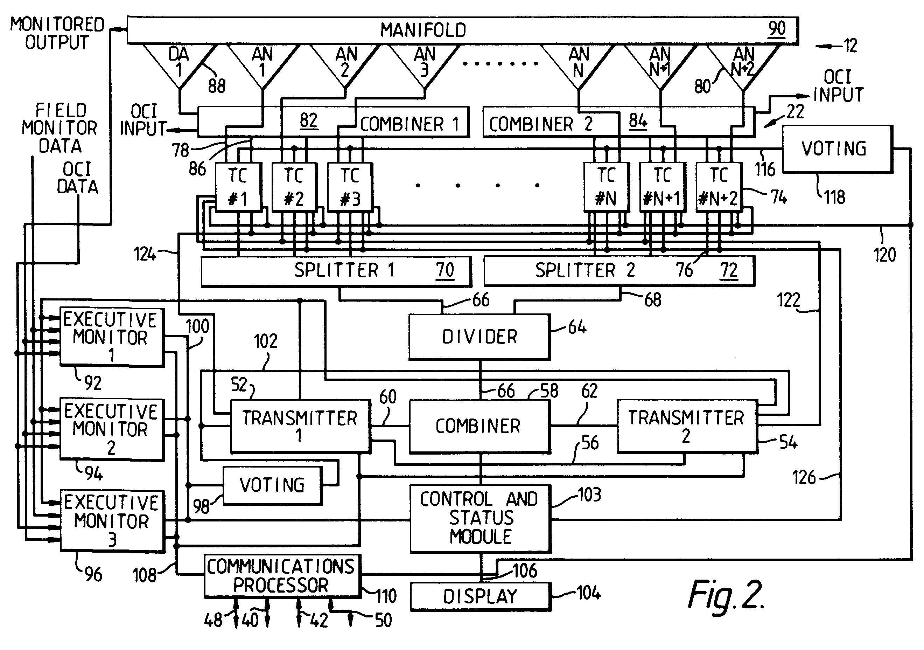

Referring now to Figure 2 there is shown approach azimuth controller 22 in assembled relation with antenna array 12. It should be realized that the following description of controller 22 is also substantially descriptive of each of the controllers 24 and 26 and that any differences between controller 22 and that of controllers 24 and 26 will be noted and explained as part of the following discussion.

Specifically, controller 22 includes transmitters 52 and 54 which generate electromagnetic energy which is eventually and selectively radiated by arrays 12 and 28. Each transmitter 52, 54 is sequentially and alternatively activated for a programmable length of time in order to allow each of the transmitters 52, 54 to be periodically tested and to further allow continued operation of system 10 upon the occurrence of a single transmitter fault. This sequential and alternative activation occurs by the transmission of a control command, from the currently deactivated transmitter 52, 54 to the currently activated transmitter 52, 54, by means of bus 56. Once the currently activated transmitter 52, 54 receives this command, it becomes deactivated while the currently deactivated transmitter 52, 54 becomes activated and begins to generate electromagnetic energy. This alternating and sequential activation continues until one of the transmitters 52, 54 becomes faulty, at which time the single, non-faulty, transmitter 52, 54 remains activated while the faulty transmitter is isolated from the system in a manner to be discussed.

The output of each of the transmitters 52, 54 is respectively directed into a passive (i.e. not operatively utilizing electrical energy) combiner 58 by means of connectors 60 and 62. Passive combiner 58 allows the energy output of the currently activated transmitter 52, 54 to be directed to energy divider 64 by means of connector 66. Divider 64 subsequently directs this input energy (generated from one of the transmitters 52, 54) to connectors 66 and 68 which are respectively placed at the input of energy splitters 70 and 72.

Connectors 76, in one embodiment, are used to couple the energy which is output from splitters 70,72 to each of the transmitter controllers 74. However, in this first embodiment, it is preferred that this energy coupling be achieved in a connectorless fashion. This connectorless coupling arrangement, which will be discussed, allows the generated energy to be efficiently coupled to each of the transmitter controllers 74 in order to allow controllers 74 to amplify and shift the phase of their respective received energy signal while subsequently placing the respective phase shifted and amplified signal on output line 78.

In the first embodiment of this invention, each of the transmitter controllers 74 has an energy output which is uniquely associated with a single one of the beam scanning antennas 80 of the array 12. Accordingly, each of the output lines 78 is uniquely coupled to the input of a single one of the antennas 80. It should be appreciated by those of ordinary skill in the art that the separate amplification of the output signals from splitters 70 and 72, by each of the transmitter controllers 74, allows for the use of relatively low power and reliable transmitters 52, 54 and obviates the use of a relatively inefficient and unreliable high power function switch adapted to sequentially select one of the transmitters 52, 54 so as to allow these transmitters 52, 54 to alternatively function in the manner previously specified and to selectively couple their respective generated energy to arrays 12 and 28 and antenna 88. Rather, a relatively simple and efficient passive combiner 58 may be used to couple the energy from the transmitters 52, 54 to each of the controllers 74 and to allow the transmitters to periodically and alternatively become activated by the use of a relatively simple communication mechanism, as previously discussed. The use of a passive combiner 58 and relatively low power transmitters 52, 54 therefore allows system 10 to be both more efficient since power is not being expended by a switch and also less prone to overall failure since there are no inherently unreliable active elements (i.e. such as a high power function switch) present in the system and includes no single component which is shared by both transmitters 52, 54 and whose fault would prevent each of these transmitters 52, 54 and hence, system 10 from functioning.

Each transmitter controller 74, in this first embodiment of the invention, is also adapted to amplify the input signal, from splitters 70, 72, to a second and higher level and to output this highly amplified and phase shifted signal to one of the passive combiners 82, 84 by means of connectors 86. Combiners 82 and 84 subsequently direct this highly amplified input signal to antenna array 28 while combiner 82 additionally and selectively directs this highly amplified input signal to a data antenna 88 which may, in one embodiment, be physically deployed within array 28. The use of the data generated from antenna 88 will be explained in greater detail later. Such output energy, from each of the controllers 74, may be coupled to the combiners 82, 84 in a connectorless manner which will be discussed.

As can further be seen by reference to Figure 2, array 12 also includes a manifold 90 which is coupled to each of the antennas 80,88 and which is adapted to receive a portion of the energy radiated by each of the antennas 80,88 and to direct this received energy portion to each of the fault detection monitors 92, 94, and 96. Monitors 92, 94, and 96 also receive output signals from the field monitor antenna 34 and from the power detector 97, which is coupled to array 28, and uses these received output signals to analyze the operational readiness of the system 10 in a manner to be explained. The operation and assembled arrangement of manifold 90 will also be explained.

After this fault analysis is completed, monitors 92, 94, and 96 each output a signal to voting apparatus 98 by means of bus 100. In one embodiment of monitors 92, 94, and 96, this output signal will be of a relatively high amplitude if a system fault is ascertained and will be of a relatively low amplitude otherwise. Apparatus 98 ensures, in a manner to be explained, that at least two of the monitors 92, 94, and 96 must determine that a system failure exists before transmitters 52 and 54 and/or other portions of system 10 are deactivated. This transmitter deactivation is caused by a signal, emanating from voting apparatus 98, which is output onto bus 102 and which is received by transmitters 52, 54. Apparatus 98 therefore minimizes system deactivation due to false system alarm conditions and ensures continued system operation even upon the failure of one of the monitors 92, 94, and 96, since the overall fault output signal is comprised of substantially equal contributions from each of the monitors 92, 94, and 96 and since the fault signal will not be generated until at least two of the monitors 92, 94, and 96 determine that a fault actually exists. One embodiment of apparatus 98 will be explained in greater detail later.

The monitor-determined and voted system status is further input to the control and status module 103, by means of bus 102, in order to allow module 103 to subsequently transfer this status to the display module 104 by means of bus 106. In this manner, a local operator of system 10 may readily ascertain the operational status of system 10 and relatively quickly recognize the occurrence of a fault condition. The determined system status is further output from the voting apparatus 98, by means of bus 102, to the communications processor 110 in order that the status may be sent to the remote control and status device 46 or to the remote maintenance monitor device 44. Additionally, communications processor 110 allows the system status to be sent to the azimuth controller 22 by either the elevation controller 24 or by the back azimuth controller 26.

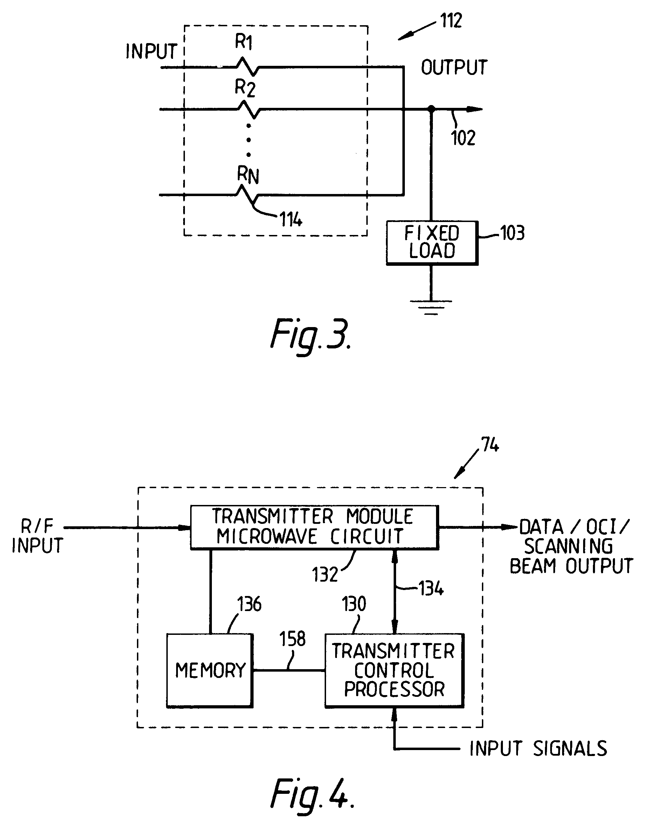

One example of circuitry which may comprise apparatus 98 and which may be used to perform the aforedescribed voting operation is that of circuit 112, shown in Figure 3. Specifically, circuit 112 includes several substantially identical resistors 114 which are arranged in parallel fashion. Each resistor 114 has an input coupled to the output of a separate and unique one of the monitors 92, 94, and 96 and an output coupled to bus 102. Fixed load 103 ensures the integrity of the output signal on bus 102. In this manner, the total or overall electrical output current signal on bus 102 is equally incremented or contributed to by each of the output signals of each of the monitors 92, 94, and 96. Alternatively, apparatus 98 may comprise a digital circuit arrangement in which an input fault signal comprises a first logical value and an input operationally sound signal comprises a second logical value. Such a digital arrangement would then require at least two fault signals (each corresoponding to a first logical valve) to occur before outputting a system fault and would also allow system operation to continue upon the failure of one or more monitor devices.

The output signal on bus 102, in one embodiment, defines an error or fault condition only upon reaching a certain threshold amplitude level which is recognized by or is effective to deactivate the transmitters 52 and 54 in a manner to be described. The electrical resistive values of each of the resistors 114 may be adjusted so as to allow this fault threshold value to be reached only when a certain number of the monitors 92, 94, and 96 indicate a fault condition. For example, if the resistive value of each of the resistors 114 is rather high, a relatively large number of monitors 92, 94, and 96 must recognize a fault condition before the transmitters 52 and 54 are deactivated. Alternatively, if the resistive value of each of the resistors 114 is low, then only a small number of the monitors 92, 94, and 96 need to recognize an error condition before the transmitters 52 and 54 are deactivated. This is due to the fact that the use of relatively high resistive values allows each of the output signals, emanating from each of the monitors 92, 94, and 96, to make only a relatively small contribution to the overall error signal, whereas relatively low resistive values allows each of the output signals from each of the monitors 92, 94, and 96 to make a relatively large contribution to the overall error signal. It should be apparent to one of ordinary skill in the art that the larger the contribution made by a single monitor 92,94,96 becomes, the smaller will be the number of monitors required for a fault condition to be generated. Further, it should be apparent that by allowing the transmitters 52 and 54 to be deactivated only upon concurrence of a relatively large number of monitors 92, 94, and 96, system 10 is less likely to be deactivated due to a false fault (i.e. a false fault likely sensed by only one of the monitors 92, 94, and 96) while still being capable of operating upon the failure of some of the monitors 92, 94, and 96.

To begin the operation of system 10, each of the transmitter controllers 74 generates two separate synchronization signals (i.e. one synchronization signal is associated with data and the other with beam generation) and places these dual synchronization signals onto bus 116 where they are input to voting apparatus 118. Apparatus 118, in this first system embodiment, is substantially similar to circuitry 112 of Figure 3 and allows each of the transmitter controllers 74 to equally contribute to the composition of each of the two overall synchronization signals which are eventually output from circuitry 118. The use of these signals is explained below.

The two voted synchronization signals are then output, from apparatus 118, onto bus 120 where they are input back into each of the transmitter controllers 74 in order to synchronize the operation of these controllers in a manner to be described. The output signals on bus 120 are also input to the communications processor 110 which transmits them across busses 40 and 42 to the communications processor 110 of the elevation controller 24 and back azimuth controller 26, respectively.

Once these signals are received by the communication processor 110 of the elevation controller 24 and back azimuth controller 26, they are relayed by means of bus 108 (of each of these controllers 24 and 26) to their respective transmitters 52 and 54 and to their respective executive or fault monitors 92, 94, and 96. From the back azimuth and elevation transmitters 52 and 54, these received synchronization signals are transported to each of the respective back azimuth and elevation transmitter controllers 74 by means of respective busses 122 and 124. Concomitantly, each of the respective fault monitors 92, 94, and 96 (of the elevation controller 24 and back azimuth controller 26) analyze the received synchronization signals in order to determine the occurrence of a fault condition. The operation of these fault monitors 92, 94, and 96 will be explained later.

To compensate for any communications delays present on the busses 40 and 42, each of the transmitter controllers 74 (of the elevation controller 24 and the back azimuth controller 26) is made to delay the received synchronization signals for some predetermined period of time sufficient to allow all of the respective transmitter controllers 74, of both the elevation controller 24 and the back azimuth controller 26, to receive the synchronization signals and to further allow the synchronization reply transmission to begin at a time after which the controllers 24 and 26 have all received the synchronization signals. In practice, this delay may be experimentally derived and will vary depending upon the characteristics of the physical medium represented by busses 40 and 42 and by the exact system implementation (i.e. number of transmitter controllers 74 actually employed).

The delayed synchronization signals are then returned to the transmitters 52 and 54 of each of the elevation controller 24 and back azimuth controller 26, by means of associated busses 122 and 124, and then input to respective communications processors 110 after being delayed for a second predetermined period of time to insure that both of the transmitters 52 and 54 have received these reply signals. These reply synchronization signals are then respectively output from processor 110 (of each of the elevation controller 24 and back azimuth controller 26), by means of busses 40 and 42, to the communication processor 110 of controller 22. These synchronization replies are then input, by means of bus 108, to fault monitors 92, 94, and 96 of controller 22. The receipt of these synchronization reply signals ensures that the "slave" controllers 24 and 26 are operating properly and are aligned a a proper starting time. This aforedescribed synchronization reply procedure occurs for every periodic generation of voted synchronization signals emanating from the transmitter controllers 74 of the azimuth controller 22 and in this manner, synchronized communication periodically occurs between controller 22 and controllers 24 and 26.

Each of the transmitter controllers 74, of controller 22, is further coupled to the control and status module 103, through bus 126, in order that various transmit control parameters may be remotely transmitted to these controllers 74. These parameters will be explained in greater detail later. Additionally, each of the transmitter controllers 74 monitors the data which is transmitted from its uniquely associated antenna 80 and the synchronization signals which it generated or receives. Fault signals associated with this module monitoring are transmitted to control and status module 103 in a manner to be explained.

Referring now to Figure 4 there is shown one of the transmitter controllers 74 of approach azimuth controller 22 of the first embodiment of this invention and which includes a transmitter controller processor 130 which is responsible for defining the phase of the generated beam of radiation emanating from the antenna 80 uniquely associated with the controller 74; for formulating and causing the radiation of data from this antenna 80; and for causing the necessary out of coverage radiation to be generated and radiated from array 28. Each of these functions is performed at specific timed intervals according to a transmission protocol which will be explained later. In this first embodiment of the invention, processor 130 comprises an application specific integrated circuit in order to obviate the need for software and its inherent unreliability in the performance of these aforementioned critical functions. It should, however, be obvious to one of ordinary skill in the art that processor 130 may, in an alternate embodiment, comprise a microprocessor based apparatus under stored program control.

Further, processor 130 is coupled to a transmitter module microwave circuit 132, by means of bus 134, and is further coupled to memory 136 by bus 138. Microwave circuit 132 receives electromagnetic energy input from the transmitters 52, 54 and, under the control of processor 130, amplifies and shifts the phase of this input energy thereby selectively outputting the phase shifted and amplified energy to the uniquely associated antenna 80 to antenna 88, or to array 28. Memory 136 is used to store data and various control parameters used by the controller 130 in its operation, which will be explained later.

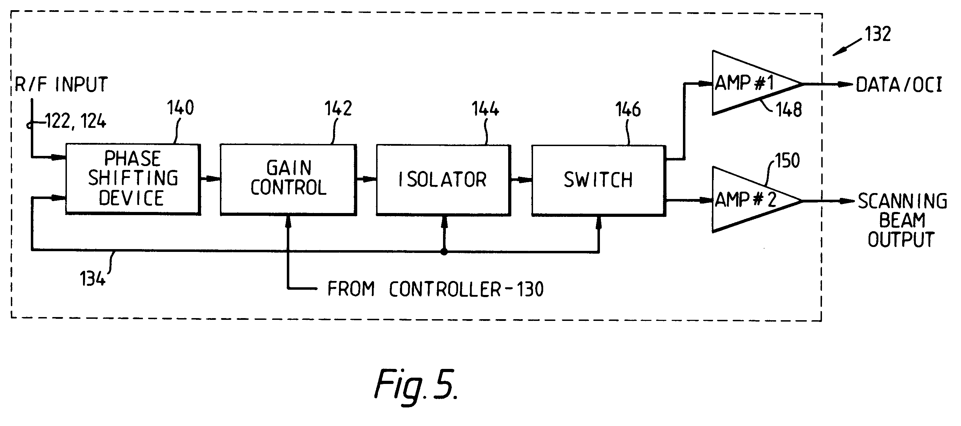

Referring now to Figure 5, there is shown one embodiment of transmitter modular microwave circuit 132 as comprising a phase shifting device 140 which is coupled to the electromagnetic energy signals generated from transmitters 52 and 54, by means of busses 124 and 122 respectively. Each bus 122, 124, in one embodiment, is adapted to be coupled to a mechanical connector and to cooperate with this connector so as to allow energy to be transferred to device 140. Device 140 shifts the phase of this energy input, in response to control signals occurring on bus 134 from processor 130, and further outputs this phase shifted radiation to gain controller 142.

Controller 142 adjusts the gain or amplitude of the phase shifted radiation, in response to control signals on bus 134 which emanate from controller 130, in order to increase the amplitude of the phase shifted signal thereby increasing the signal to noise ratio which effectively reduces distortion of the output signal from the circuit 132. This amplified signal, from controller 142, is then input into isolator 144 comprising, in one embodiment, an amplifier incorporating an isolation or on/off switch. Isolator 144 is selectively activated by controller 130, by means of control signals on bus 134, and is effective to electrically and selectively "switch off" the amplified and phase shifted signal emanating from controller 142, thereby preventing this energy from entering switch 146. The signal from controller 142, is input through isolator 144 and if no isolation is desired, switch 146 (comprising a two way changeover switch in one embodiment) is selectively activated by a control signal on bus 134, emanating from processor 130.

The combination of isolator 144 and controller 142 allows for testing of each of the antennas 80. Such testing, of one of these antennas 80, is achieved by activating each isolator 144 of all of the antennas 80, 88, except that one uniquely associated with the antenna 80 under test. The gain controller 142, of the antenna 80 under test is then made to amplify the input signal from device 140. This amplified signal is then coupled to the antenna under test, in a manner to be discussed below, and the radiated output energy is sampled by manifold 90. In this manner, it may be determined whether the antenna under test is adequately performing.

Switch 146 directs the isolated signal, emanating from isolator 144, to either a relatively high powered amplifier 148 or to a relatively low powered amplifier 150. These amplifiers are also selected and/or enabled by processor 130 in accordance with a control signal on bus 134. In a preferred embodiment of this invention amplifier 148 comprises a two watt high powered amplifier while amplifier 150 comprises a one-half watt amplifier. The amplified output signal from amplifier 148 is then directed to either array 28 or antenna 88 while the amplified signal output from amplifier 150 is directed to array 12. It should be obvious to one of ordinary skill in the art that the use of separate amplifiers 148 and 150 obviates the need for relatively high powered transmitters 52 and 54 which are switched by means of a high power and active function switch, which has been found to be inherently unreliable. Therefore, the use of dual amplifiers 148 and 150 allows for the use of passive combiners 82 and 84 rather than an active and unreliable function switch. The use of such combiners 82 and 84, as previously stated, increases the reliability of system 10 and increases the length of time that the system 10 may be operable before a failure occurs.

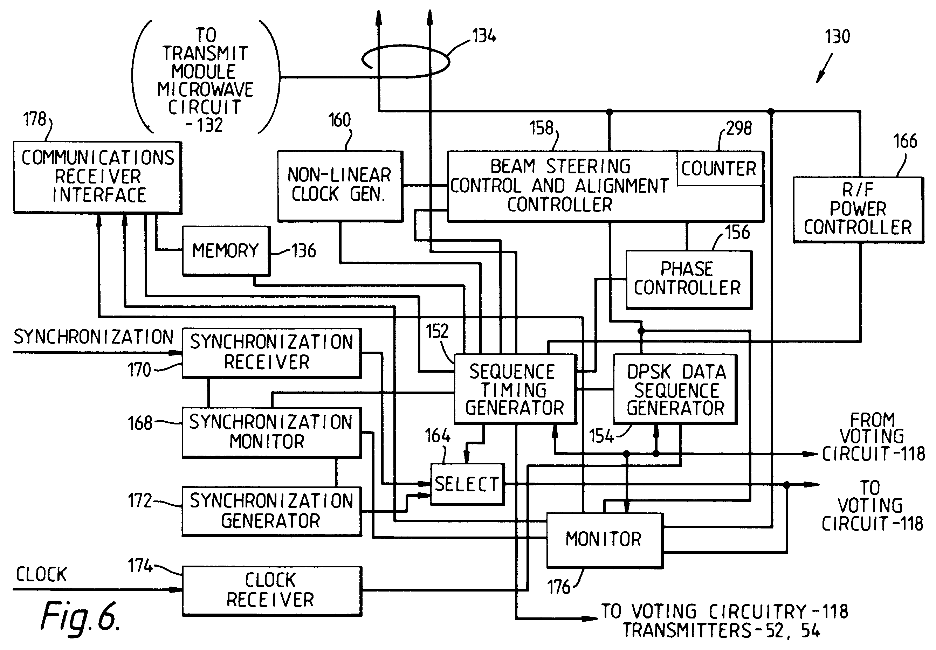

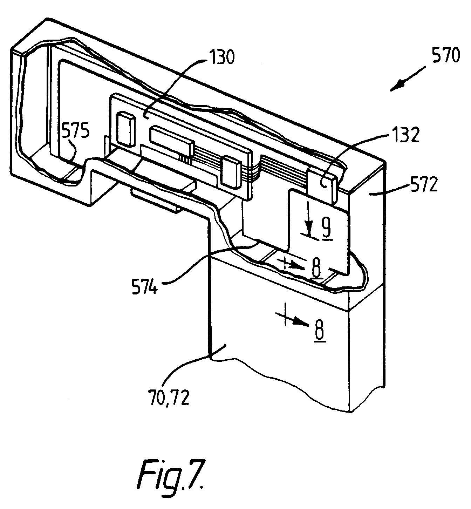

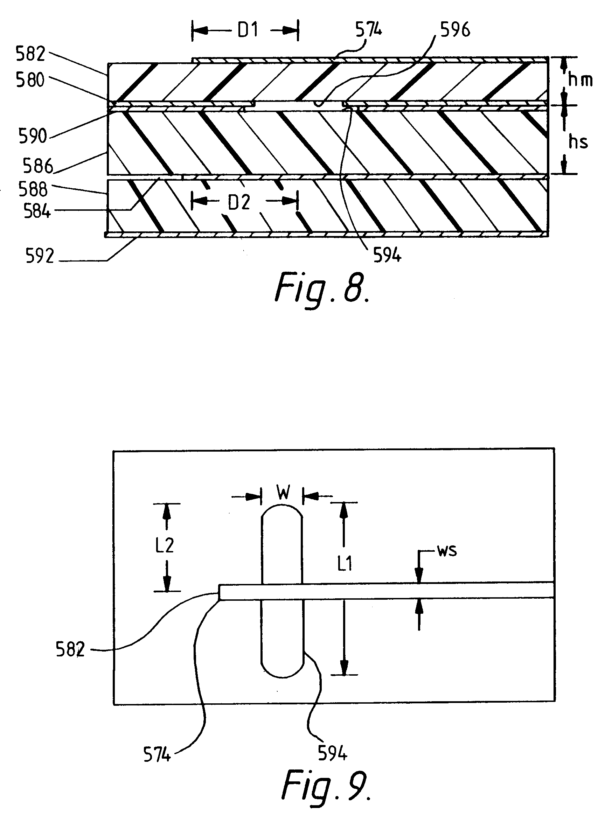

Referring now to Figure 6 there is shown a transmitter control processor 130 used within the first landing system embodiment of this invention and including a sequence timing generator 152 which sequentially causes data to be generated from antenna 88, out of coverage energy to be radiated from array 28, and guidance radiation to emanate from array 12 in accordance with relatively any desired operational protocol. Such protocol is defined, in this first embodiment, by the United States' Federal Aviation Administration in solicitation number DTFAOl - 90 - R - 07049. Further, generator 152 is coupled to a data sequence generator 154 which selectively generates data to be transmitted by antenna 88; a phase controller 156 which forces device 140 to change the phase of transmitter generated radiation so as to modulate this energy in a manner which will allow this data to be radiated from antenna 88; a beam steering control and alignment controller 158 which defines the phase shift to be given to the radiated beams of scanning guidance radiation; a non-linear clock generator 160 which will be discussed; memory 136; selection switch 164; a radio frequency power controller 166 used to control the amplitude of controller 142; and a synchronization monitor 168 which monitors and compares the received synchronization signals with the majority voted synchronization signals to determine the existence of a transmitter controller fault. Control processor 130 further includes a synchronization receiver 170, coupled to monitor 168 and switch 164, which is adapted to receive synchronization signals from an approach azimuth controller 22 (if the transmitter controller 74 is employed within a back azimuth controller 26 or an elevation controller 24 arrangement). The generation and receipt of these dual synchronization signals has previously been discussed.

Control processor 130 further includes a synchronization generator 172 which is adapted to generate the previously discussed dual synchronization commands emanating from the approach azimuth controller 22. These commands are input into selection switch 164 and are selectively output therefrom in a manner to be described. Processor 130 further includes a clock receiver 174 which receives a clock signal from the transmitters 52 and 54 and which outputs clock signals to the data sequence generator 154 so as to control the generation of data in a manner to be described. Further, control processor 130 includes a monitor 176 having inputs coupled to the synchronization monitor 168; to generator 154; and to voting circuitry 118 and further having a first output coupled to a communications receiver 178. Monitor 176 compares voted data signal outputs emanating from circuitry 118 and radiated by antenna 88 with the actual data and also compares the voted functions (i.e such as that associated with the radiation of scanning beams) with the function specified by generator 152. If the comparison discloses a fault (i.e. the respective compared signals are not substantially identical), monitor 176 transmits a fault signal to interface 178 where it is eventually sent to processor 110 for viewing by a remote user of system 10 or, by means of a signal on bus 134, adjusts the phase defined by device 140 in order to correct for any ascertained faults. Further, monitor 176 receives a fault indication signal. emanating from monitor 168, and transmits this synchronization fault signal to interface 178.

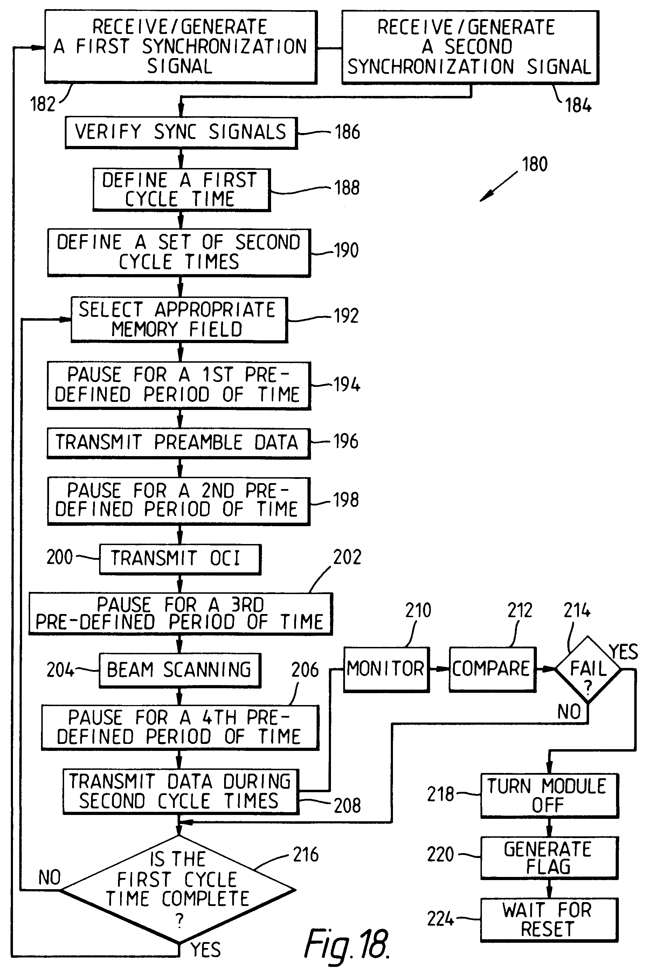

In a preferred embodiment of this invention, transmitter controller 74 comprises an application specific integrated circuit in order to obviate the need for software and, more importantly, to avoid the inherent unreliability which is associated with software so as to allow for the quantification of system integrity. In order to fully understand the operation of transmitter controller 74 reference is now made to Figures 18-21. Although these figures describe the operation of the transmitter controller 74 in terms of functional operational steps, it should be realized that these steps, in the preferred embodiment of this invention, do not reflect software operations but rather describe a functional operation of an application specific integrated circuit. Further, although these steps are described in terms of sequential operations, it should be understood that many of these steps may be completed in parallel or concurrent fashion and that the actual sequence of these steps may be modified as desired. Further, it should also be realized, by one of ordinary skill in the art, that software may be employed, in other embodiments of this invention, to perform substantially the same or some of the functions which are now to be described.

Referring now to Figure 18 there is shown a flow chart 180 illustrating the general sequence of operational steps associated with the transmitter controller 74. Initially, as shown in steps 182 and 184, synchronization generator 172 generates two separate synchronization signals. A first of these synchronization signals is used to synchronize the transmission of radiation from the various arrays 12, 18, 20, 28, 30, and 32, while the second synchronization signal is used to synchronize the radiation of energy (i.e. data) from antenna 88. These generated synchronization signals are then output from the generator 172 to the selection switch 164. It should be realized, by one of ordinary skill in the art, that the following sequence of steps may be modified as desired and that any such modifications are considered to be within the scope of this invention.

If transmitter controller 74 resides within elevation controller 24 or back azimuth controller 26, these previously generated synchronization signals (i.e. from the associated approach azimuth controller 22) are received by the synchronization receiver 170 in a manner previously explained. These received synchronization signals are then output to the selection switch 164. Timing generator 152 selects either the generated synchronization signals (if controller 74 resides within controller 22) or alternatively the received synchronization signal. The selected signal is then output from switch 164 to voting circuitry 118. The use of such synchronization signals has been previously been explained. Two unique synchronization signals are then output from voting circuitry 118 to the sequence timing generator 152 to synchronize its operation. These voted signals are also input to monitor 168 which compares the voted signals with those received (by receiver 170) or generated (by generator 172) and, based upon this comparison, issues a fault signal to monitor 176, if it determined the existence of a fault (i.e. the compared signals are not substantially the same). Upon receipt of these two synchronization signals, timing generator 152 defines a first and second set of cycle times used in the operation of system 10, as shown in steps 188 and 190.

Step 190 is then followed by step 192 in which sequence timing generator 152 selects an appropriate memory field from memory 136 and then, in step 194, pauses for a first predefined period of time. The memory field selected in step 192 includes the preamble data which is to be transmitted by antenna 88. This preamble data is transmitted before any of the other system transmissions are generated such as the guidance beam and out of coverage radiation in accordance with the previously indicated communications protocol utilized by the United States Federal Aviation Authority. After this first predefined period of time has elapsed, preamble data signals from each controller 74 are voted by circuitry 118 and this voted signal is transmitted by antenna 88 in accordance with step 196.

After the transmission of this preamble data is completed, generator 152 pauses for a second predefined period of time, as shown in step 198, and then transmits the "out of coverage" radiation by means of array 28, as shown in step 200. This radiation is generated by directing the transmitter produced radiation to amplifier 148 which outputs the amplified radiation onto bus 86 and then subsequently to combiners 82, 84. Step 202 follows step 200 and, during this step, generator 152 pauses for a third predefined period of time before generating the scanning beam of radiation from array 12, as shown in step 204. When the beam has been scanned, generator 152 waits for a fourth predefined period of time, in accordance with step 206, before transmitting voted data during the defined second cycle time, as shown in step 208. Such data, associated with step 208, in one embodiment, may also be transmitted after step 200 or step 196 depending upon the user desired system configuration.

The transmitted voted data is then monitored by monitor 176, as shown in step 210, and is compared with data which has been previously received by monitor 176 from generator 154 in order to ascertain whether the transmitted data is valid. This comparison is achieved in step 212. After this comparison is completed, monitor 176 ascertains whether the transmitted data is valid, as shown in step 214. If the transmitted data was valid, then step 214 is followed by step 216 in which the sequence timing generator 152 determines whether the first cycle time has been completed. If the first cycle time has not been completed, step 216 is followed by step 192. Alternatively, step 216 is followed by step 182.

If, in step 214, the transmitted data was found faulty, a transmitter disable signal is output from the monitor 176 to the interface 178 where it is then transmitted to generator 152 in order to deactivate the individual module 74.

Step 218 is then followed by step 220 in which the monitor 176 generates an error flag to the communications interface 178 which then outputs this flag to the control and status module 103 and eventually to display 104. Step 220 is then followed by step 222 in which the transmitter controller 74 remains deactivated until a reset command is received by the communications receiver 178. Upon receipt of such a reset command, generator 152 becomes operable. It should be understood by one of ordinary skill in the art that the first and second sets of cycle times and the determination of the occurrence and length of these times is accomplished by generator 152 in conjunction with stored data in memory 136, by use of a typical counter mechanism in combination with the clocking signal outputs from receiver 174.

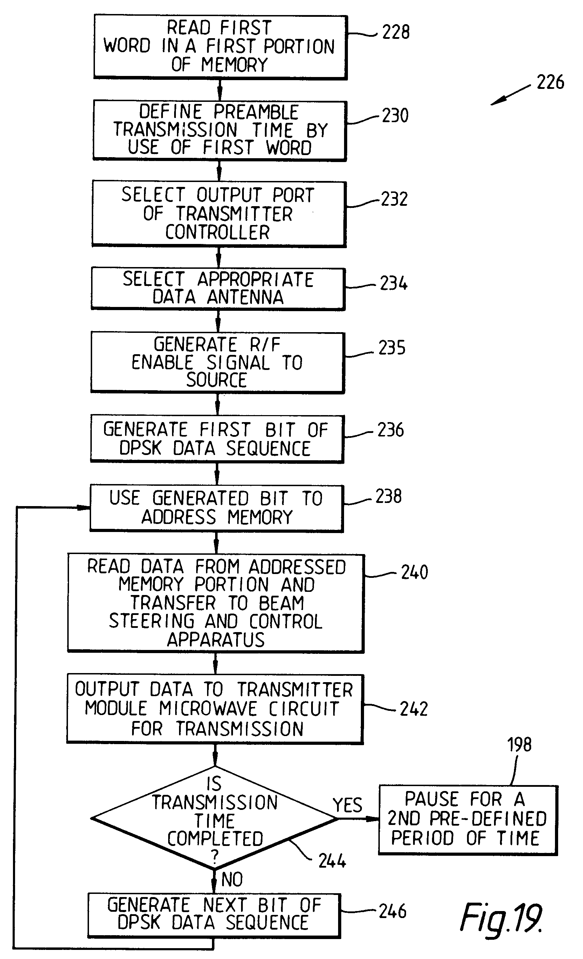

Referring now to Figure 19 there is shown a flow chart 226 which illustrates a sequence of operational steps associated with the transmission of preamble data (i.e. step 196 of flow chart 180). Specifically, flow chart 226 comprises a first step 228 in which the generator 152 reads a first word in the selected memory field of step 192 uses this first word to define the preamble data transmission time, as shown in step 230. Step 230 is then followed by step 232 in which generator 152 selects an appropriate output port of the transmitter controller 74. This selection is accomplished by a command placed onto bus 134 which directs the switch 146 to output the radiated frequency energy into amplifier 148 and then to data antenna 88.

Step 232 is then followed by step 234 in which data antenna 88 is selected by selecting the unique combiner output port which is coupled to antenna 88. Step 234 is then followed by step 236 in which transmitter controller 74 generates an enablement signal through voting circuitry 118 to one of the transmitters 52, 54. As earlier explained, circuitry 118 prevents the false generation of an enablement signal by a few of the controllers 74 while allowing the system 10 to function even after some of the controllers 74 become deactivated. Receipt of this voted enablement signal allows the currently activated transmitter to begin transmitting electromagnetic energy.

After enabling one of the transmitters 52, 54, generator 152 activates data sequence generator 152 in order to allow generator 154 to produce a first bit of data, as shown in step 236. This first bit is used, by generator 152 in step 238, to address memory 136. The addressed data from memory 136 is subsequently transferred to the steering control and alignment controller 158, in step 240. This data, in step 242, is voted and the voted output is coupled to circuit 132 in order for it to be radiated from antenna 88. In practice, this radiation is accomplished by shifting the phase of the radiated output energy such that the energy has a 180° phase change representing a logical one and a 0° phase change representing a logical zero. These two possible phase states are defined by controller 156 which forces controller 158 to assume either one of two states depending upon the characteristics of the data to be transmitted. As earlier stated, the phase defined by controller 158 is input to device 140 which performs the actual phase shifting operation upon the transmitter generated radiated energy.

After this transmission has begun, generator 152, in step 244, ascertains whether the transmission time defined in step 230 is completed. If this transmission time is not completed, generator 152 generates another portion of the data sequence, in step 246, which is used to address another portion of memory 136, as shown in step 238. If the transmission time has been completed, then step 244 is followed by step 198, as shown in Figure 18.

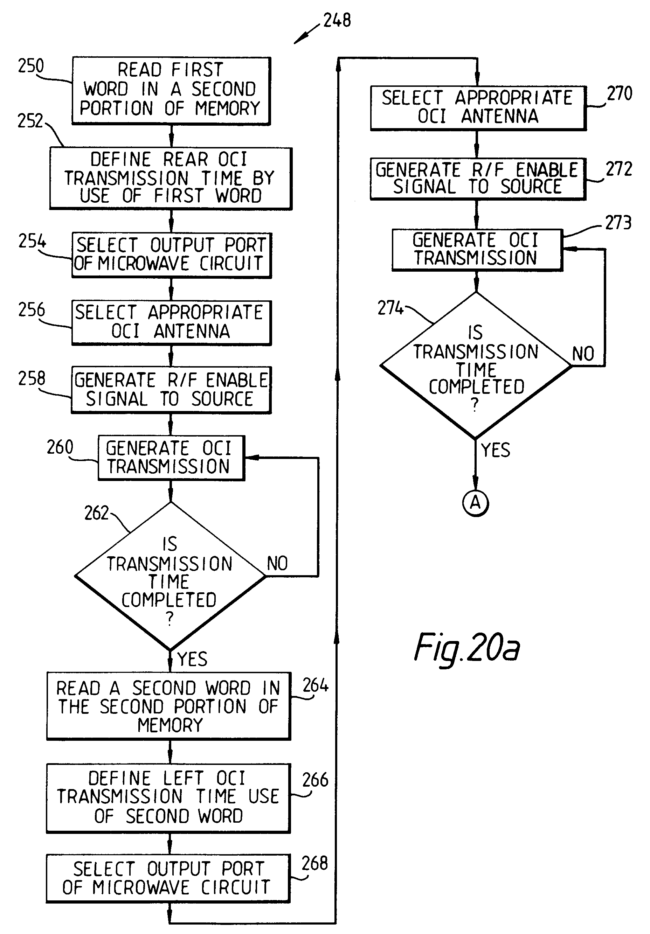

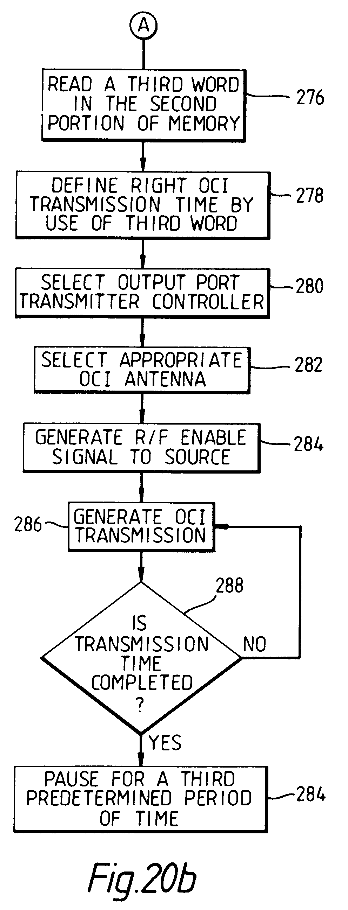

Referring now to Figures 20(A-B) there is shown a flow chart 248 illustrating the sequence of operational steps associated with the transmission of out of coverage radiation from array 28, as shown in step 200. Initially, flow chart 248 comprises an initial step 250 in which generator 152 reads a first word in a second portion of the defined memory field of step 192 and, in step 252, uses this addressed first word to define a rear out of coverage transmission time.

That is, in this first embodiment of this invention, array 28 is divided into three radiating portions. These portions are orientated such that each of them radiate energy in a specific direction relative to that of the incoming aircraft 14. The first of these portions is termed a "rear OCI portion" due to the fact that this portion radiates energy away from the direction of the incoming aircraft 14. The remaining portions are termed "left out of coverage arrays" and "right out of coverage arrays" due to the fact that they respectively radiate energy to the left and to the right of the incoming aircraft. These three portions therefore cooperate, in a manner so as to provide electromagnetic shielding of reflected radiation from the incoming aircraft 14.

Step 252 is followed by step 254 in which the appropriate output port of the transmitter module microwave circuit 132 is selected. As before, this output port is selected by the transmission of a selection signal by generator 152 which is placed onto bus 134 and which is received by switch 146. This selection signal only allows the modulated electromagnetic frequency to be output through amplifier 148. After this output port selection has been completed, generator 152 selects the rear radiating portion of array 28 by appropriately selecting those unique output ports of combiners 82 and 84 which are coupled to the rear radiating portion of array 28.

Step 256 is then followed by step 258 in which the generator 152 produce a transmitter enabling signal to the voting circuitry 118. The voted enabling signal is then transmitted to the currently activated transmitter 52, 54. Step 258 is then followed by step 260 in which the currently activated transmitter 52, 54, after receipt of the voted transmitter enabling signal, generates radiation which is input into the circuit 132 by means of busses 122, 124. This generated energy is then radiated by the selected portion of array 28. Step 260 is followed by step 262 in which generator 152 ascertains whether the transmission time, defined in step 252, is complete. If the transmission time is not complete, step 262 is followed by step 260. Alternatively, step 262 is followed by step 264 in which the generator 152 reads a second word of memory 136 and, in step 266, uses this second word to define the transmission time of the left out of coverage transmission time. Step 266 is then followed by step 268 in which generator 152 selects the appropriate output port of the circuit 132 such that the radiated energy is only sent through amplifier 148, in a manner which has been previously explained.

Step 268 is then followed by step 270 in which the generator 152 selects the appropriate desired radiating portion of array 28 by selecting those output ports of combiners 82, 84 uniquely corresponding to the desired portions of array 28. Step 272 follows step 270 in which generator 152 generates a transmitter enabling signal to the voting circuitry 118. The voted enabling signal is eventually directed to transmitters 52 and 54, as described in step 272. The enabled transmitter 52, 54, in step 273, generates electromagnetic energy which is output from amplifier 148 to the selected array portion 28 in the form of out of coverage transmitted energy. Step 274 follows step 273 in which generator 152 determines whether the transmission time, defined in step 266, is complete. If this transmission time is not complete, step 274 is followed by step 273. Alternatively (i.e. if the transmission time has been completed), step 274 is followed by step 276 in which generator 152 reads a third word from the second portion of memory defined in step 250. This third word is then used to define the transmission time of the right out of coverage portion of array 28, as described in step 278.

To begin generation of the right out of coverage radiation, generator 152, in step 280, causes the transmitter produced electromagnetic energy, which is coupled, to circuit 132, to be output through amplifier 148 in a previously described manner. After this selection has been completed, generator 152 selects the appropriate right out of coverage portion of array 28, as shown in step 282, by selecting the unique output ports of combiners 82, 84 which are associated with this portion of array 28. Step 284 follows step 282 and, in this step, generator 152 produces a transmitter enabling signal to the voting circuitry 118 and the voted enabling signal is directed to the currently activated transmitter 52, 54.

The currently activated transmitter 52, 54 then is allowed or enabled to generate radiation, in step 286, which is output to the selected portion of array 28 and which appears as a right "out of coverage" radiation. In step 288, generator 152 determines whether the transmission time associated with step 278 is complete. If this transmission time has not been completed then step 288 is followed by step 286. If, in step 288, the transmission time has been completed, step 288 is followed by step 202 of Figure 18. In this aforedescribed manner, electromagnetic radiation is sequentially generated in a number of directions for a predetermined and programmable period of time in order that reflections and false guidance signals may not interfere with the true guidance signal emanating from array 12 and received by the incoming aircraft 14. In this first embodiment, the period of time associated with the radiation of this energy is defined by the Federal Aviation Authority as specified in ICAO SARPS, ANNEX 10.

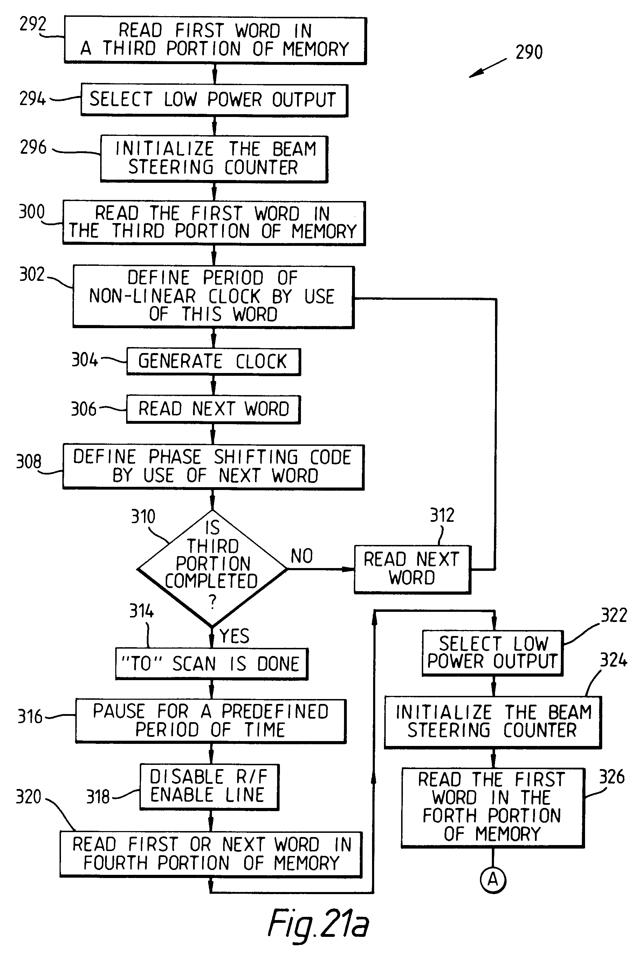

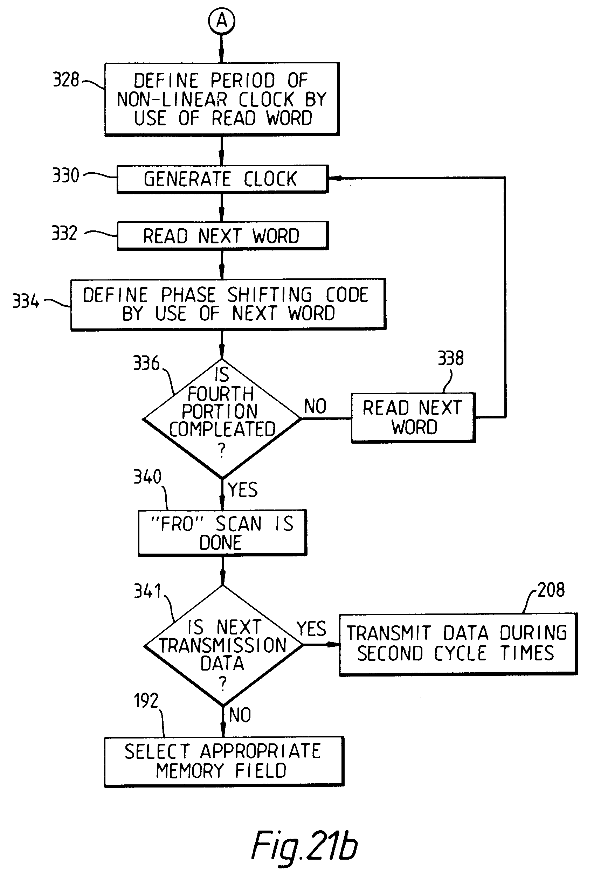

Referring now to Figures 21(A-B) there is shown a flow chart 290 which illustrates the sequence of operations associated with the generation of scanning beams of guidance radiation, described in step 204 of flow chart 180. Specifically, flow chart 290 comprises an initial step 292 in which generator 152 reads a first word in a third portion of memory 136. Step 292 is followed by step 294 in which generator 152 selects amplifier 150 by means of a control signal on bus 130 in a previously described manner. After amplifier 150 has been selected, generator 152 (as described in step 296) initializes the beam steering counter 298 which is included within the controller 158. Step 300 follows step 296 and, in this step, controller 152 reads the first word in the third portion of memory defined in step 292. This first word, is used by generator 152, to define the period of the non-linear clock 160.

Step 304 follows step 302 in which generator 160 is allowed to generate a non-linear clock signal having a period defined in step 302. This clock signal is input to counter 298 which translates the serial clock signal to a parallel four bit signal for use by device 140. These four bits are used to control the shape of the radiated guidance beams since they define the phase delay to be associated with the generated beam. By use of such serial clock signals, the number of cables required to interface antennas 80 to controllers 74 is minimized.

After clock 160 has been enabled, generator 152 reads the next word in this third portion of memory, as shown in step 306 and, in step 308, defines the next phase shifting code (i.e. period of non-linear clock 160) by use of this word. This third portion is then continuously read until depleted. Each word generates a single "to" scan. In order that the radiated sidelobes do not appear in the same position on each scan, and particularly between the "to" and "fro" scans, a number of different phases are stored in memory 136. Each of these different phases will, in practice, steer the beam to a substantially identical position, but will each set up a substantially different sidelobe structure.

Upon the completion of each "to" scan, generator 152 is made to pause for the predetermined period of time, as shown in step 316 to make sure that aircraft 14 has received the complete "to" scan beam. Step 318 follows step 316 and, in this step, controller 152 disables the transmitter enabling signal which has been previously output to voting circuitry 118. Consequently, the currently activated transmitter 52, 54 is inhibited from radiating energy. Step 320 follows step 318 in which the generator 152 reads the first word in a fourth portion of memory 136 which is included within the memory portion defined in step 192 of flow chart 180. After this first word has been read, generator 152, in step 322, selects amplifier 150 by means of a previously described control signal which is placed onto bus 134 and is subsequently received by switch 146.

Step 324 follows step 322 and, in this step, generator 152 initializes beam steering counter 298. After counter 298 has been initialized, generator 152, in step 326, reads the first word in the fourth portion of memory defined in step 320. Step 328 follows step 326 and, in this step, generator 152 defines the period of this non-linear clock 160 by use of this first word. In step 330, generator 152 allows clock generator 160 to produce a non-linear clock having a period defined in step 328. Step 332 follows step 330 and, in this step, generator 152 reads the next word of data included within the fourth portion of memory defined in step 326. This data word is used by generator 152, in step 334 to define the period of clock 160 which is input to device 140 by means of bus 134. Such words one read, each defining a separate period of the non-linear clock, until a "fro" scan is completed, as shown by steps 338 and 340. Step 341 follows step 340 and, in this step, generator 152 must determine whether data is to be next transmitted. If so, generator 152 enters step 208 or, alternatively, enters step 192. The operational steps associated with step 208 is substantially the same as shown in flow chart 226 of Figure 19.

Further, in practice all phase shifting devices 140 include small phase errors which may vary depending upon the actual phase which is currently utilized. These phase errors will cause some small inaccuracy to be imposed on the scanning beam. To eliminate these difficulties, in the first embodiment of this invention, the devices 140 of each controllers 74 are incremented in unison between each "to" and "fro" scan and after each scan pair in order that aircraft 14 may filter out the phase error.

The use and advantages of a non-linear clock with respect to beam steering is now described with respect to the scanning beam illustrated in Figure 36. As shown, scanning beam 650 comprises rays 652 and 654, each emanating from a separate antenna 80 which are spaced apart by a distance "d". Scanning beam 650 is usually desired to be inclined by an angle "$\theta$" to the horizon or to the normal of antennas 80 and the two rays 652, 654 are further usually desired to be in phase, as shown. For this condition to exist, ray 654 must have a longer path length than ray 652. The difference between these two path lengths, is denoted on path differential "x" and is caused by the radiation of rays 652, 654 in a manner which will cause ray 654 to have a transmitted phase advanced by an angle "$\phi$" relative to ray 652.

The mathematical relationship between "d", "$\phi$", and "$\theta$" was discovered to be as follows:

$\phi = (2\pi)(d/\lambda)(\sin(\theta))$; where $\lambda$ = wavelength of each of the rays 652, 654.     (equation 1)

If one differentiates (with respect to time "t") the above-identified mathematical relationship, the following result is obtained:

$d\phi/dt = (2\pi)(d/\lambda)[\cos\theta]d\theta/dt$; where $(2\pi)(d/\lambda)(d\theta/dt)$ = constant.     (equation 2)

Therefore, the use of a non-linear clock generator 160 which outputs a clock varying varies in accordance with Cos ($\theta$) allows for a constantly time changing phase relationship between each of the rays 652, 654 and allows these rays 652,654 to comprise a well distributed and easily controlled scanning beam of radiation. Therefore, in this first embodiment of the invention, the clock produced by generator 160 comprises a signal which varies according to the cosine of the angle "$\theta$".

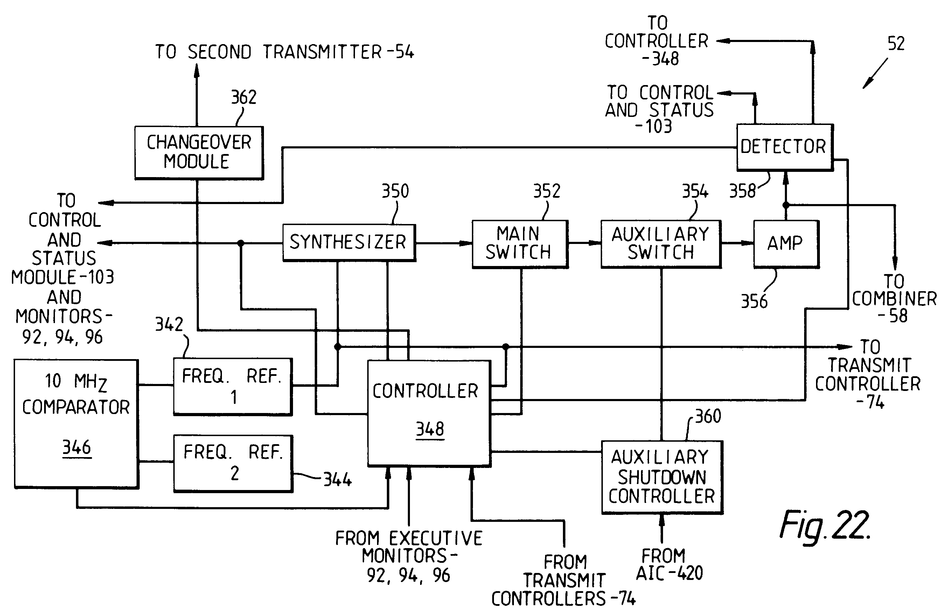

Referring now to Figure 22 there is shown transmitter 52 of a preferred embodiment of this invention. It should be realized, by one of ordinary skill in the art, that the following description associated with transmitter 52 is substantially similar to that of transmitter 54 and that any differences applicable to transmitter 54 will be noted and explained.

Specifically, transmitter 52 includes first and second clock generators 342 and 344 which, in this first embodiment of this invention, each generate relatively high accuracy clock signals at a frequency of approximately 10 Mhz.. The output of generator 342, 344 are input to a comparator 346 which compares the two clock signals and which provides a clock accuracy signal to controller 348. Transmitter 52 further includes a synthesizer 350 which is coupled to the output of clock 342 and which produces electromagnetic microwave frequency energy referenced to the receive clock signal. This energy is eventually coupled, in a previously described manner, to the various arrays 12, 18, 20, 28, 30, and 32 of system 10 after passing through main and auxillary switches 352 and 354; amplifier 356; detector 358; and passive combiner 58. The operation of these entities will now be explained.

Specifically, switch 352, which is selectively energized by controller 348, allows transmitter 52 to be deactivated upon the occurrence of a system fault. That is, switch 352 may selectively and electrically isolate the output of synthesizer 350 from system 10 by providing a relatively high impedance load to the output thereby substantially preventing the transfer of energy from synthesizer 350 to any portion of system 10. Auxillary switch 354, which is selectively energized by the auxillary shutdown controller 360, also allows transmitter 152 to be selectively deenergized, in substantially the same manner as does switch 352, upon the occurrence of a system fault which occurs when the "main" switch 352 is inoperative. Amplifier 356 increases the amplitude of the output electromagnetic energy, from synthesizer 350, in order to reduce distortion in the energy emanating from the various system arrays 12, 18, 20, 28, 30, and 32, while detector 358 monitors the output radiation, from amplifier 356, and provides a monitored output to the control and status module 103 for fault detection purposes and to controller 348. Additionally, module 103 is further coupled to synthesizer 350 in order to monitor the operation of the synthesizer in a manner to be discussed and the signal output from clock 342 is further coupled, as previously discussed, to transmit controller 74 for use in the operation of the generator 152 in the determination of the aforedescribed cycle times.

Transmitter 52, of this first embodiment of the invention, further includes a changeover module 362 which is in communication with a corresponding module 362 (not shown) of transmitter 54 and which further has a output coupled to controller 348. The communication between the two modules 362 provides an alternating and sequential activation of one of the transmitters 52 and 54 for a predetermined period of time. It should be apparent to one of ordinary skill in the art that, in one embodiment of the invention, this alternating transmitter arrangement allows for a greater increase in time before a transmitter failure occurs since each transmitter is being exercised for approximately only one-half the time of that associated with a single transmitter system and that this arrangement also allows for a relatively quick transmitter fault determination.

That is, if only a single one of the transmitters 52, 54 were utilized, as in many prior systems, a fault associated with the standby or normally deactivated transmitter 52, 54 would not normally be recognized until that standby transmitter 52, 54 were actually employed within the system. A situation could therefore arise in which the primary transmitter 52, 54 fails and a previously undetected fault makes the secondary or normally deactivated transmitter 52, 54 similarly deactivated. In this scenario, system 10 becomes totally deactivated and fails to produce the needed guidance signals to the incoming aircraft 14. Therefore by alternately utilizing each of the transmitters 52, 54, the probability of detecting a transmitter failure and the time between actual transmitter failures both increase.

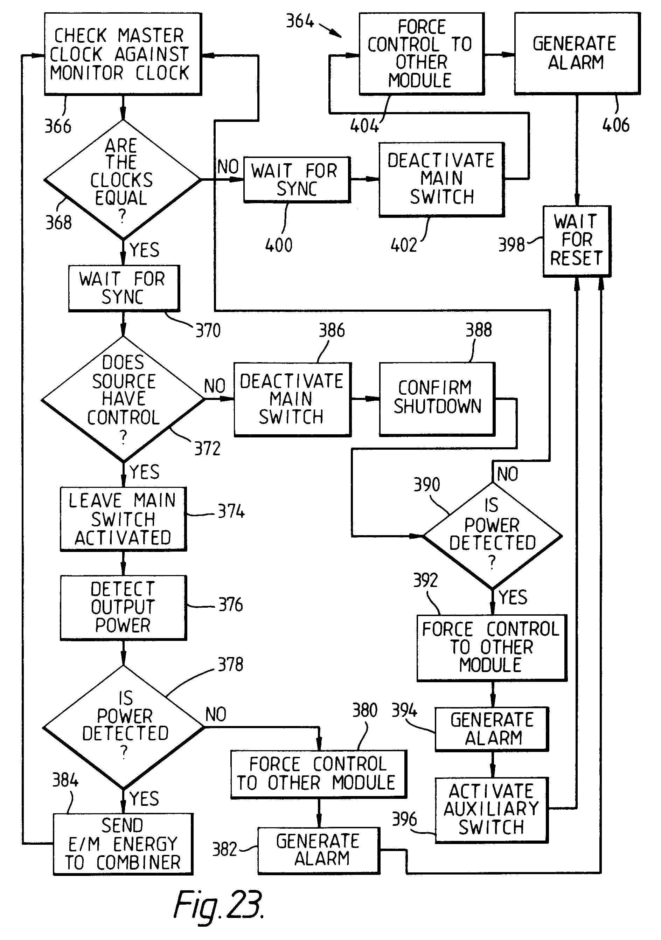

Further, in this first embodiment, controller 348 is coupled to fault monitors 92, 94, and 96 in order to receive monitor generated "shutdown" or "deactivation" commands and is further coupled to the transmitter controller 74 in order to obtain and pass the synchronization data between the transmitter 52 and the individual transmitter controllers 74, in a manner previously described. In the first embodiment of this invention, controller 348 comprises an application specific integrated circuit in order to obviate the need for software and, more particularly, the inherent unreliability of software. The sequence of operations associated with transmitter 52, and more particularly those associated with the applications specific integrated circuit controller 348, are delineated in flow chart 364 of Figure 23. It should be apparent to one of ordinary skill in the art that these operational steps may, in a second embodiment, be achieved by use of software within a typical microprocessor based controller 348 and that, in any embodiment, these operations may occur in parallel fashion and/or in a sequence which is different from that described.

Turning now to Figure 23, it is seen that the initial step 366, of flow chart 364, provides for the comparison, by comparator 346, of the two clock outputs from generators 344 and 342. If these outputs are substantially identical (as shown in step 368) then, in step 370, transmitter 52 waits for a reply synchronization signal to be received from the controllers 24 and 26 in a manner previously described. Alternatively, if transmitter 52 were employed within controllers 26 or 24 then, in step 370, transmitter 52 would wait for a synchronization signal to be received from the controller 22.

Step 370 is then followed by step 372 in which controller 348 determines, from its communication with changeover module 362, whether transmitter 52 currently has control or is activated. If transmitter 52 is currently activated, then step 372 is followed by step 374 in which the main switch 352 remains activated allowing energy, generated by synthesizer 350, to be electrically coupled to system 10. Step 374 is then followed by step 376 in which controller 348 detects the output power emanating from amplifier 356 by communicating with detector 358. If no power is detected, as shown in steps 378, 380, and 382, then controller 348 causes the changeover module 362 to force transmitter 54 to become activated and then generates an alarm to the control and status module 103.

If output power is detected in step 378, controller 348 allows the generated energy to be sent to combiner 58 (Figure 2) and begins to check the clock outputs of clocks 342 and 344 as respectively shown in steps 384 and 366. If, in step 372 it is determined that transmitter 52 has no current control, controller 348, in step 386, deactivates switch 352 to prevent energy, produced by transmitter 52, from entering combiner 58. Step 386 is then followed by step 388 in which controller 348 detects the presence of radiated energy emanating from amplifier 356, by use of detector 358. If power is not detected in step 390, controller 348 continues to again check and compare the two clock outputs of generators 344 and 342, as shown in step 366.

If power is detected in step 390, controller 348 communicates with changeover module 362, in step 392, and causes transmitter 54 to become activated and, in step 394, generates an alarm to the control and status module 103. Step 396 follows step 394 and, in this step, controller 348 activates switch 354 by use of controller 360. Such activation ensures that energy emanating from synthesizer 350 is prevented from entering combiner 58. Step 396 is then followed by step 398 in which controller 348 waits for a manual "reset" command to be transmitted to it by an operator of system 10. Upon receipt of such a "reset" command, controller 348 deactivates switch 354 thereby allowing transmitter 52 to begin generating energy, if enabled.

If the clock signal outputs from clocks 342 and 344 were found to be dissimilar in step 368, controller 348 waits for receipt of a synchronization signal in substantially the same manner as it does in step 370 and, in step 402, deactivates switch 352 in order to deactivate transmitter 52. Step 402 is then followed by step 404 in which controller 348 communicates with changeover module 362 in order to force transmitter 54 to an operable state. Step 406 follows step 404 in which controller 348 generates an alarm to the control and status module 103 and then enters step 398 while awaiting receipt of a "reset" command from an operator of system 10. As can be seen by one of ordinary skill in the art, transmitter 52 allows for the selective generation and transmission of electromagnetic energy utilized to the various arrays of system 10 but becomes selectively deactivated upon the occurrence of a system fault. This deactivation, in practice, is critical to the proper operation of system 10 since false and/or incorrect guidance signals, received by incoming aircraft 14, would have a detrimental effect upon the ability of the aircraft 14 to properly land and may, in some cases, cause a crash or other injury to the aircraft or to its passengers. The use of auxillary switch 354 provides additional safety in the event that both switch 352 and transmitter 52 become concurrently faulty. In such a concurrent fault scenario, errant guidance radiation transmissions would be generated for a substantial period of time without any substantial mechanism or means for deactivating faulty transmitter 52. Such errant transmissions could, of course, detrimentally effect the ability of the incoming aircraft 14 to safely land upon runway 16.

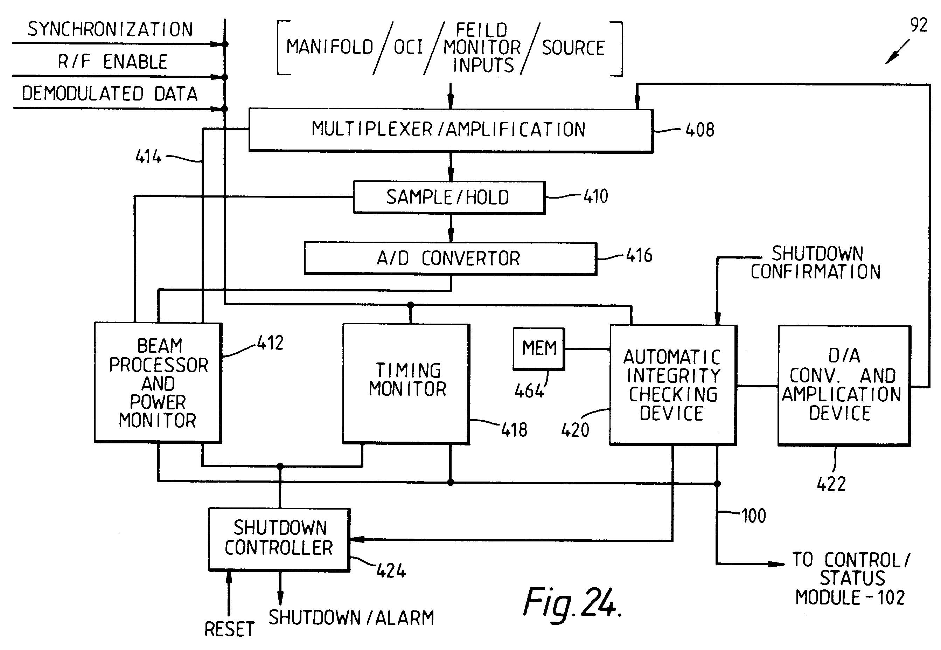

Referring now to Figure 24 there is shown the fault monitor 92 of the first embodiment of this invention. It should be realized, by one of ordinary skill in the art, that the following discussion associated with fault monitor 92 is substantially similar to that associated with each of fault monitors 94, 96 and that differences associated with these monitors 94 and 96, from that of fault monitor 92, will be noted and explained.

As seen, fault monitor 92 includes a multiplexer and amplification device 408 which is coupled to transmitters 52, 54, to power detector 97, to array 28, and to field monitor 34 (which receives and which provides the radiated data and scanned beam radiation emanating from array 12), and to the output of manifold 90 which provides a monitored portion of the scanned beam emanating from array 12 which corresponds to a unique scan angle. These amplified signals are selectively input to a sample and hold circuit 410 by means of control signals on bus 414, emanating from the beam processor and power monitor 412. These selectively sampled and held signals are then coupled to an analogue to digital converter 416 before being input to the beam processor and power monitor 412 for analysis.

Fault monitor 92 further includes a timing monitor 418 which monitors synchronization signals, transmitter enabling signals, and all demodulated data emanating from antenna 88. Further, fault monitor 92 includes an automatic integrity checking device 420 which ensures the proper operation of system 10 in a manner to be described. Further explanation of the use of monitors 412 and 418 and device 420 will now follow.

The output of the automatic integrity checking device 420 is coupled to a digital to analogue converter device 422 in order that certain data, associated with device 422, may be input in an analogue state to the multiplexer and amplification device 408 and used to check the operational readiness of monitor 92. Monitors 412 and 418 and device 420 are also coupled to a shutdown controller 424 which is used to deactivate one of the transmitters 52, 54 upon the ascertainment of an occurrence of a system fault. Such deactivation occurs by a signal emanating from controller 424 to either the controller 348 (which selectively de-activates switch 352) or the auxillary controller 360 (which selectively de-activates switch 352) in a manner which has been previously described. Lastly, monitors 412 and 418 and the device 420 are further coupled to the control and status module 103, by means of bus 100, in order that an ascertained system fault condition may be displayed by display 104 so as to alert an operator of system 10 of the condition of a system fault condition.

In the first embodiment of this invention, beam processor and power monitor 412 together with timing monitor 418 and automatic integrity checking device 420 all comprise separate applications specific integrated circuits in order to obviate the need for software and, more particularly, the inherent unreliability of the software. However, in other embodiments, each of these entities may comprise microprocessor based devices under stored program control. The following description of these monitors 412, 418 and of device 420 is accomplished with reference to a flow chart comprising sequential and discrete operations. It should be realized that such operations, in practice, may be achieved in a substantial parallel fashion and may be performed in a sequence which differs from that shown. Further, such operations may also be performed by the stored program which is utilized by the microprocessor, of an alternate embodiment.

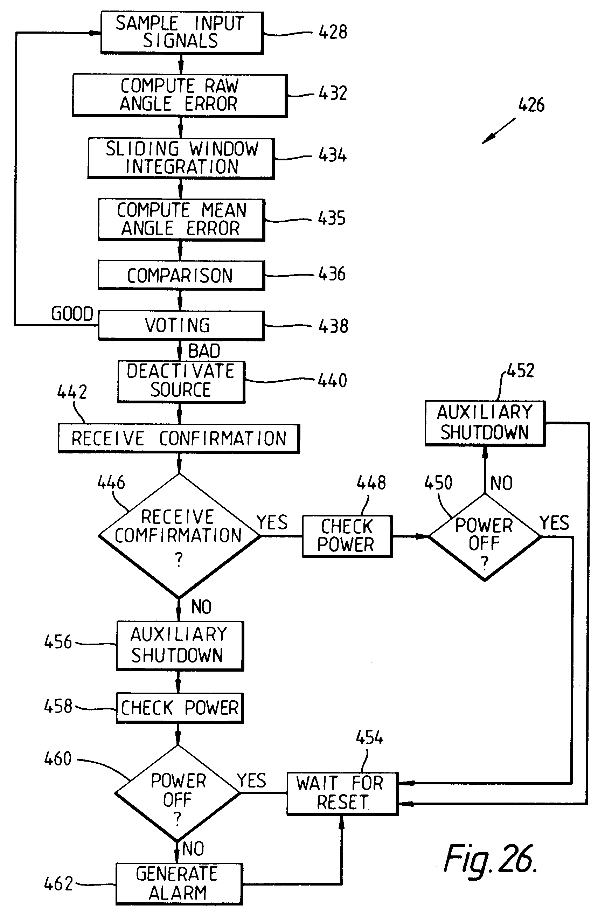

Referring now to Figure 26 there is shown a flow chart 426 illustrating the sequence of operations of beam processor and power monitor 412. Specifically, monitor 412 initially samples signals which are input to device 408, as shown in step 428. This sampling is achieved by the generation of a select signal onto bus 414 which allows a selected one of the input signals to traverse devices 408, 410, and 416 and to be eventually input to monitor 412. Step 428 is then followed by step 432 in which monitor 412 computes the raw angle error of the input signal. Step 432 is followed by step 434 in which a sliding window integration is performed upon the sampled input. Step 435 follows step 434 in which a mean angle error is computed on the integrated data. Signals input into device 412 include output power (from monitor 17) of radiation emanating from array 28, a portion of the scanning beam from manifold 90, transmitted data, and the synthesizer output power.

The mean angle signal is then compared with a previously stored signal, in step 436, in order to allow monitor 412 to determine if the sampled input signal is valid. The result of this comparison is input, as shown in step 438, to voting circuitry 98, by means of bus 100. Voting circuitry 98 ensures that each monitor 92, 94, 96 has a substantially identical contribution to the overall comparison result, in a manner previously explained, in order to allow a system error signal to be generated only upon an error determination by multiple numbers of monitors 92, 94, 96. If it is determined that the input signal is valid, step 438 is followed by step 428. However, if the output signal of circuitry 98 comprises a signal above a certain threshold (indicating, in this first embodiment, that several of the monitors 92, 94, and 96 have ascertained that a faulty input signal was received), step 438 is followed by step 440 in which the currently activated transmitter 52, 54 is deactivated by the deactivation of switch 352 in a manner previously explained.

Step 440 is then followed by step 442 in which a "shutdown" confirmation is received by the device 420. Such confirmation comprises a signal, emanating from controller 348, indicating actual deactivation of switch 352. Step 442 is then followed by step 446 in which monitor 412 determines whether device 420 actually received this "shutdown" confirmation by communicating with device 420 over bus 100. If such a "shutdown" confirmation was received, step 446 is followed by steps 448 and 450 in which the monitor 412 interrogates detector 358, by means of control and status module 103, in order to determine whether the deactivated transmitter 52, 54 is still generating power. If such power remains, step 450 is followed by step 452 in which an auxillary shutdown command is issued to the auxillary shutdown controller 360 in order to activate switch 354. Step 452 is then followed by step 454 in which the monitor 412 waits for receipt of "reset" command by an operator of system 10. Step 454 also follows step 460 if, in step 460, it was determined that the main shutdown was successful.

If, in step 446, it was determined that no confirmation was received, a signal is issued to controller 360, in step 456, which is effective to activate switch 354, in a manner previously described. Step 456 is then followed by steps 458 and 460 in which the monitor 412 interrogates detector 358, by means of control and status module 103, in order to determine whether any power is still being generated from the deactivated transmitter 52, 54. If such power is still generated, step 460 is followed by step 462 in which monitor 412 generates an alarm to display 104 by means of the control and status module 103. Step 460 is followed by step 454 only if the deactivated transmitter 52, 54 actually discontinued the generation of power after being deactivated in step 456.

Turning now to monitor 418, it should be apparent to one of ordinary skill in the art that monitor 418 receives the synchronization signals emanating from transmitters 52, 54 and the synchronization signals emanating from voting circuitry 118 and compares these received synchronization signals with previously stored signals in order to determine the validity of the received signals. Additionally, monitor 418 receives demodulated data, from the field monitor 34, as well as the transmitter enabling signals, emanating from voting circuitry 118, and compares these signals with previously stored and valid signals. If any of the processed received signals differ in time from the previously stored signals, an alarm is generated to the control and status module 103 and both a primary and an auxiliary transmitter shutdown operation, as explained with reference to monitor 412, is accomplished by communication with controller 424.

Automatic integrity checking device 420, in the first embodiment of this invention, periodically checks the operational readiness of the monitor 92 by periodically isolating monitor 92 from system 10 and testing monitor 92, in this isolated stat. Alternatively, two monitors 92, 94, and 96 may be simultaneously isolated and tested and made to generate the results of these tests to voting circuitry 98. The output of circuitry 98 is then compared with each of these monitored outputs in order to ascertain whether the circuitry 98 is operational.

The automatic integrity tests are accomplished by the generation of parameters, which are stored within memory 464 and which are selectively addressed by device 420 before being output to converter/amplifier 422. Converter 422 places these parameters in analogue form in order that they may selectively input into monitors 412, 418 in substantially the same manner as the respective, and previously defined, input signals are. In this embodiment, these parameters are processed by monitors 412 and 418 in the same manner as the previously described respective input data.

These input parameters are arranged such that they will cause, at known times, a failure of each of the monitors 412 and 418. Each of these failures will result in the activation of controller 424. This activation will be effective to deactivate switch 352, thereby disabling the previously activated transmitter 52, 54. As can be appreciated, by one of ordinary skill in the art, this automatic integrity checking scheme allows for each of the monitors 92, 94, and 96 to be frequently exercised such that faults may be readily identified within each of the monitors 92, 94, 96; within voting circuitry 98; or within the main switch 352 in controller 348. Device 420 however, does not check the integrity of auxiliary switch 354 or of the device itself. For this reason and to allow for greater fault detection, an "end-to-end" operation is provided in this embodiment.

This "end-to-end" integrity checking procedure is accomplished during the aforementioned automatic integrity checking procedure. Specifically, device 420 is made to access a portion of memory 464 separate from that containing the integrity checking parameters. Specifically, this separate memory portion contains parameters which will cause one of the monitors 412 and 418 to fail, though device 420 expects them to pass.

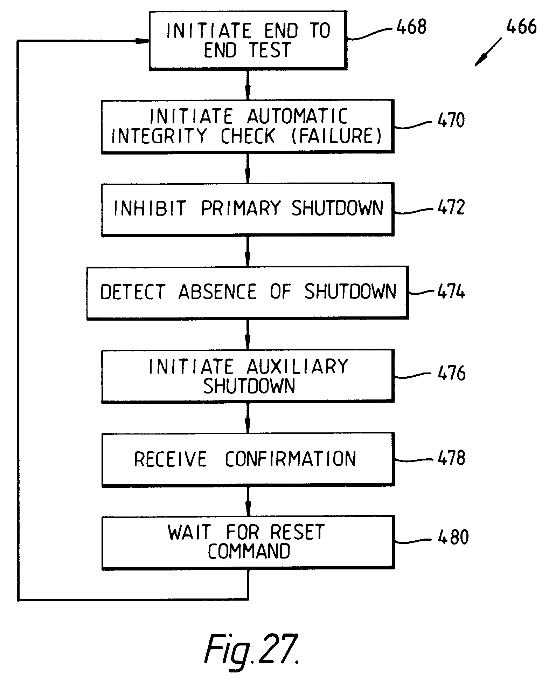

Specifically, the "end-to-end" integrity checking operation comprises an initial step 468 (as shown in flow chart 466 of Figure 27) in which a command from control and status module 103 is received by device 420 to initiate an integrity test or by the periodic generation of this test by device 420 itself. Step 468 is followed by step 470 in which the device 420 initiates or generates data to either monitor 412 or 418 which is stored in the separate section of memory 464. This data causes the tested monitor 412, 418 to fail, though device 420 expected a valid signal output. Step 470 is then followed by step 472 in which the command sent by device 420 to controller 424 fails to result in the issuance of a "deactivation" command by controller 424. That is, device 420 is made, during such "end-to-end" testing, to send a faulty command to controller 424 in order to purposely prevent the deactivation of switch 352.

Device 420 therefore fails to receive a "shutdown" confirmation signal from controller 348, as shown in step 474, and now transmits an auxiliary "shutdown" command, through module 103, as shown in step 476, to controller 360. Step 476 is followed by step 478 in which device 420 receives a "confirmation" signal from controller 348 indicating the successful deactivation of switch 354. Monitor 92 then enters step 480 where the monitor 92 waits for a manual "reset" command to be generated from an operator of system 10. It should be readily apparent to one of ordinary skill in the art that this "end-to-end" checking procedure in combination with the automatic integrity checking procedure allows substantially all of the various components of monitor 92 to be periodically exercised and tested as well as the switches 352 and 354 and associated controllers 348 and 360, at periodic intervals of time. Further, it should be apparent that this testing also exercises voting circuitry 98 and therefore provides a complete and periodic testing of the fault monitor system within system 10 thereby ensuring for continued fault-free operation of the overall system.

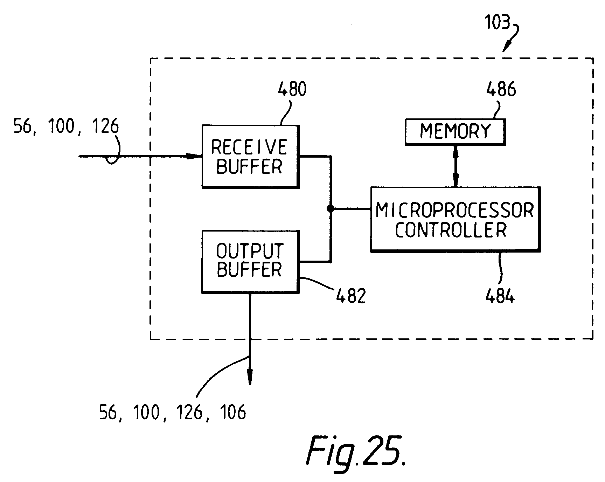

Referring now to Figure 25 there is shown the control and status module 103 of the first embodiment of this invention as including a receive buffer 480 which has an input coupled to busses 56, 100, and 126 and which receives previously described synchronization, alarm, and "shutdown" commands/confirmation signals from transmitters 52 and 54 and monitors 92, 94, and 96. Module 103 further includes an output buffer 482 which has an output coupled to bus 106 and to busses 56, 100, and 126 in order to allow for the communication of previously received signals, stored by buffer 480, to be addressably output therefrom in a manner previously explained. Module 103 further includes a microprocessor controller 484 having a memory 486 and being coupled to receive buffer 480 and output buffer 482. Controller 484 processes the signals received by buffer 480 and allows these received signals to be queued and coupled to buffer 482 in order that they may be eventually transmitted to the proper addressed entity.

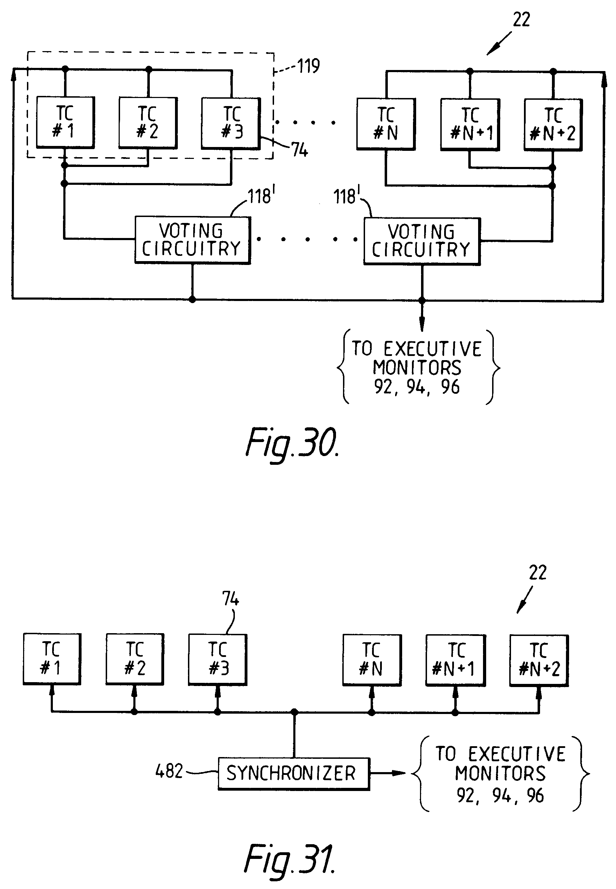

Referring now to Figure 30 there is shown a second embodiment of approach azimuth controller 22 which differs from the first embodiment of this invention (as shown in Figure 2) by the use of multiple voting circuit arrangements 118'. That is, this second embodiment employs several voting circuits 118' which are uniquely associated with separate sets 119 of transmitter controllers 74. Each circuit 118' functions in a substantially identical fashion to that of circuit 118 of Figure 2. This distributed voting arrangement however, allows for greater fault tolerance of the overall system 10. That is, system 10 will continue to be operable upon the fault of one or more of the voting circuit arrangements 118' whereas, in the embodiment of Figure 2, system 10 would be rendered inoperable should the single voting circuit 118 become faulty.

In the second embodiment shown in Figure 30, each of the outputs of the voting circuits 118' are separately input to monitors 92, 94, and 96 where they are separately analyzed, for each set 119, in substantially the same manner as was done for the single output voting circuit 118. Additionally, the outputs of the individual circuits 118' are input to each respective and associated set 119 of the transmitter controllers 74 associated with that particular circuit 118' in substantially the same manner and for substantially the same purpose as was done for the single voting circuit 118, shown in Figure 2.

Referring now to Figure 31 there is yet another embodiment of the approach azimuth controller 22 of this invention in which a single centralized synchronizer 482 is used to generate the aforedescribed dual synchronization commands which, in the first embodiment of this invention (Figure 2) were generated by generator 152 of each of the transmitter controllers 74. In this alternate embodiment, synchronizer 482 is adapted to generate and couple these dual synchronization commands to every transmitter controller 74 included within the elevation controller 24, back azimuth controller 26, and the approach azimuth controller 22. This arrangement allows each of the transmitter controllers 74 to be of a simpler design and obviates the need for synchronization delays within each of the transmitter controllers as well as the need for separate synchronization reply signals. The output of synchronizer 482, in this embodiment, is further coupled to the executive monitors 92, 94, 96 in order to allow the dual synchronization signals to be analyzed in the aforedescribed manner.

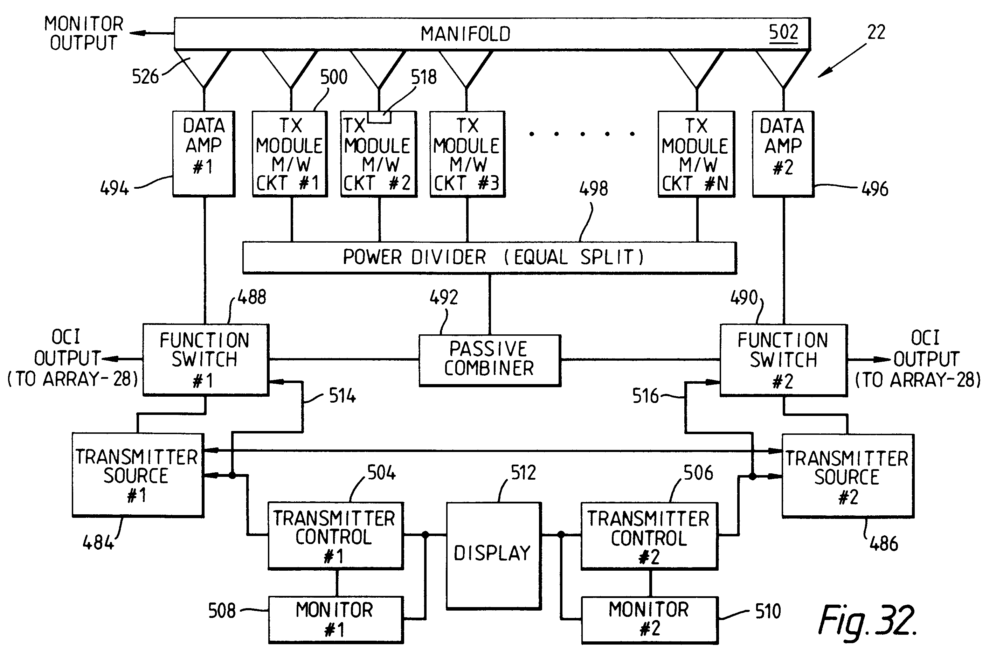

Referring now to Figure 32 there is shown a fourth embodiment of the azimuth controller 22 of this invention and including two transmitters 484 and 486 which output electromagnetic energy to respective function switches 488 and 490. The switches 488, 490 each have a first output which is selectively coupled to a passive combiner 492, a second output which is selectively coupled to data amplifiers 494 and 496, and a third out of coverage output which is selectively coupled to array 28 (Figure 1). The output of combiner 492 is coupled to an equal split power divider 498 having several outputs, each of which is uniquely coupled to the input of a transmitter module microwave circuit 500. The output of each of these circuits 500 is coupled to an input of a manifold 502 which produces a monitored beam output.

Azimuth controller 22, of this fourth embodiment of the invention, further includes substantially identical transmitter controllers 504, 506 which are respectively coupled to transmitters 484 and 486 and further includes substantially identical monitors 508 and 510 which are respectively coupled to controllers 504 and 506. Additionally, controller 22 includes an operator display 512 which is coupled to monitors 508 and 510. It should be realized by one of ordinary skill in the art that the discussion relating to controller 22 of the fourth embodiment of this invention, is equally applicable to controllers 24 and 26 and where differences exist, such differences will be noted and explained.

In operation, transmitters 484 and 486 cooperate such that each of them is alternately activated, in a manner previously explained. The energy emanating from one of the transmitters 484, 486 is input into the respective switches 488, 490 and is then output in response to command signals emanating from the respective controllers 504, 506. That is, each controller 504, 506 specifies, by signals on respective busses 514, 516, whether the generated energy is to be output to array 28, to amplifier 494, or to the combiner 492. In this embodiment, each of the circuits 500 includes a single amplifier 518 which amplifies the energy emitted from the transmitters 484, 486 thereby obviating the need for an active (i.e. power consuming) function switch which is highly prone to failure. Rather, switches 488, 490, in this embodiment of the invention, both comprise passive switches which are reliable and fault tolerant. Further, the controller 22, of this embodiment, also utilizes separate data amplifiers 494 and 496 in order to ensure that the transmitted energy is amplified to a desirable level and that data may be transmitted even upon the failure of a single one of the amplifiers 494, 496. Each of the monitors 508 and 510 are substantially identical to the monitors 92, 94, and 96 of the first embodiment of this invention and are adapted to monitor system 10 and themselves in a manner which have been previously explained.

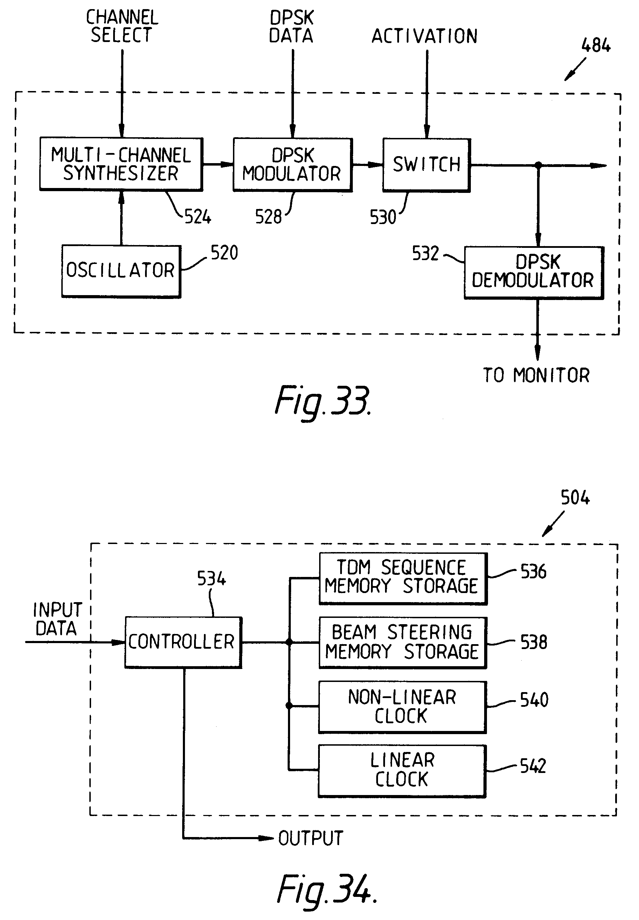

Referring now to Figure 33 there is shown transmitter 484 of this fourth embodiment of the invention. It should be apparent to one of ordinary skill in the art that the following discussion with respect to transmitter 484 is substantially similar to that associated with transmitter 486 and that any differences between the two transmitters 484 and 486 will be noted. Specifically, transmitter 484 includes an oscillator 520 which has an output coupled to a synthesizer 524 and which provides the needed electromagnetic energy in a frequency and in a form necessary for the output to arrays 28 and 12 as well as to generate data by use of data antenna 526. The output of synthesizer 524 is input to modulator 528 which modulates the data impressed thereon by the transmitter controller 504. The modulated data output of modulator 528 is coupled to a switch 530 under the control of controller 504. The output of switch 528 is subsequently input of one of the arrays 12, 28 and to demodulator 532 in order for monitor 508 to analyze the transmitted data. Such data analysis is achieved in substantially the same manner as performed by monitor 92.

When data is not present, the electromagnetic output of synthesizer 524 is allowed to pass through modulator 530 and couple directly to the input of switch 530 where it is input, through function switch 488 to either array 28 or 12, depending upon the signal on bus 514.

Reference is now made to Figure 34 which illustrates the transmitter controller 504 of this fourth alternate embodiment of this invention. It should be apparent to one of ordinary skill in the art that the following discussion with respect to transmitter controller 504 is substantially identical to that of transmitter controller 506. Where difference exist, between controllers 504 and 506, these differences will be noted and explained. Specifically, controller 504 includes a timing controller 534 coupled to a sequence memory 536, a beam steering memory 538, a non-linear clock 540, and a linear clock 542. Controller 534 further has an output coupled to display 512 in allow remote monitoring of clock generators 540, 542. Controller 534 further has an input port which allows remote data to be placed in memories 536 and 538.

In operation, controller 534 performs the previously described sequence of operations associated with flow chart 180 of Figure 18-20 due to the fact that memories 536 and 538 are substantially identical to memory 136 while clock 540 is substantially identical to clock 160 and clock 542 is substantially identical to clock 174. The use of such a centralized controller 534 obviates the need for a separate voting circuit arrangement, such as circuitry 118 thereby simplifying the system. The use redundant controllers 504 and 506 not only provide for system simplification but also allow for continued system operation upon the failure of a single such controller.

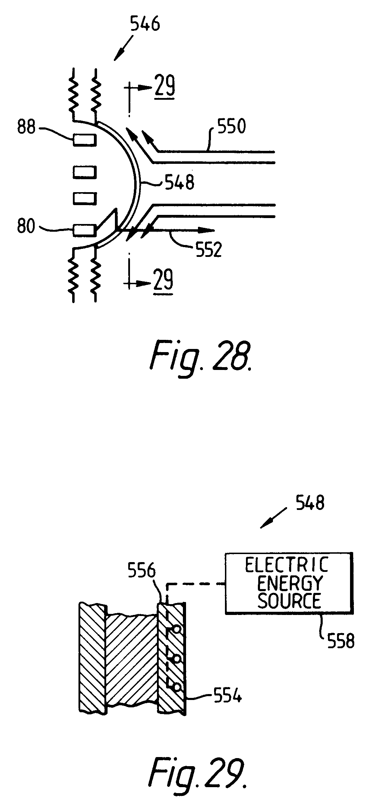

Referring now to Figure 28 there is shown a radome 546 of the first embodiment of this invention which is adapted to cover antennas 80, 88 in order to protect these antennas 80, 88 from damage caused by precipitation and to further reduce precipitation induced distortion of the radiated electromagnetic signals.

In a first radome preferred embodiment of this invention, radome 546, as shown, comprises a cylindrical surface 548 which is structured so as to disperse rain and other forms of precipitation 550 away from antennas 80, 88 thereby preventing this precipitation from interfering with the generated beams of electrical energy 552 emanating from antennas 80, 88. The dispersing nature of this radome structure reduces the overall distortion associated with beam 552 thereby increasing the integrity of the generated guidance signals. Additionally, this cylindrical radome structure further allows each of the beams 552 to impinge the structure in a substantially normal fashion thereby further reducing reflection losses caused by the interaction of the beam 552 and the structure 548.

Further, as shown in Figure 29, radome surface 548, in a second radome embodiment of this invention, further includes an outer surface 554 having several heating elements 556 embedded therein which are each coupled to a source of electrical energy 558. This electrical energy source allows the heating elements 556 to be heated so as to melt ice and various other forms of precipitation which may adhere to surface 548. Such melting further reduces the probability that the generated beams 552 will be reflected by the contaminants on surface 548 thereby reducing the probability of beam distortion. Further, one of ordinary skill in the art will recognize that many more heating elements 566 are employed than are necessary to effectively heat surface 554. This element redundancy allows such heating to occur even upon the failure of several of the elements 566 and is further consistent with the previously described system redundancy design philosophy.

(II). Waveguide Manifold

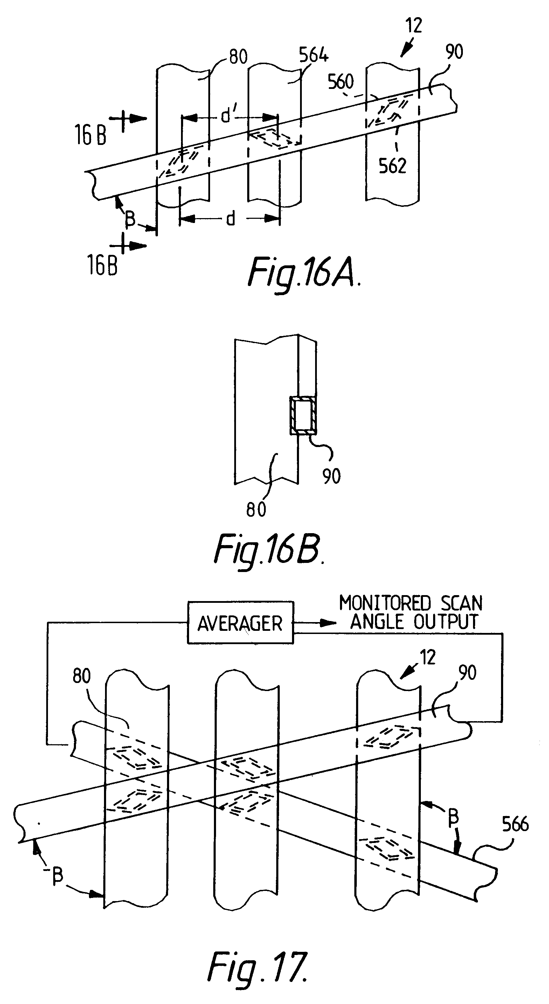

Referring now to Figures 16 (a-b) there is shown manifold 90 of the first embodiment of this invention in assembly relation with several antennas 80 each comprising a radiating slotted waveguide element. As shown, manifold 90 includes slots 560 which uniquely correspond and communicate with slots 562 of each of the antennas 80. In this manner, a portion of the energy residing within each of the waveguide antennas 80 is communicated to the interior of the manifold 90 in order that a single beam at a given scan angle may be output from the manifold 90 and monitored in a manner to be described.

It is known that the direction associated with the monitored beam is given by the following equation (if waveguide 90 is horizontally placed across the antenna array):

$$\theta_s = \pm \sin \lambda o \ (1/2d - 1/\lambda_g) \qquad \text{(Equation 3)}$$

where "$\lambda$"$_o$ is equal to the free space wavelength; "$\lambda$"$_g$ = wavelength in the waveguide manifold 90; and "d" equals the coupling slot pitch.

The value of "d" is fixed by the spacing of the radiating antenna elements 80 and the value of "$\lambda$"$_g$ is determined by the broad wall dimensions of the manifold 90 and the frequency of operation. Further, the value of "$\lambda$"$_s$ is determined by the broad wall dimension of the manifold 90. For typical microwave landing system azimuth arrangements, the value of "$\theta s$" is equal to approximately ± five degrees, for most applications. Therefore, the sine of the monitored scan angle "$\theta$" is dependent upon the particular end of manifold 90 at which the monitored beam is sampled. The only mechanism available to alter the monitored scanned angle is to alter the wavelength of the guided electromagnetic energy in the waveguide manifold 90.

This wavelength parameter may be modified by dielectrically loading monitor 90 or by changing the broad wall dimensions of the waveguide manifold 90. These approaches, while technically feasible, are disadvantageous since they result in a non-standard manifold 90 which is substantially more expensive than previous designs. Further, such modified manifolds 90 further produce a monitored beam whose scan direction is a function of both frequency and spacing of the coupling slots. Therefore, any dimensional or frequency changes, of manifold 90, will cause the monitored scanned angle to change requiring constant modifications to be made in or to ensure that the output monitored radiation to constantly reflects the desired scanned angle and direction.

As shown in Figure 16(a-b), it has been discovered during the development of this invention that by tilting a travelling wave manifold 90 at an angle "B" with respect to the horizon, it is possible to introduce a phase ramp in the coupling slot excitation. The magnitude and sign of this phase ramp can then be adjusted to provide relatively any desired monitored scan angled beam. That is, the relationship between the monitored scanned angle $\theta_s$, the inclination angle B, the distance "d'" between the coupling slots, and the waveguide parameters are as follows:

$$\pm\ 2\pi d\ \times\ \sin\ (\theta s)/\lambda_o\ \pm\ 2\pi d'/\lambda gm\ \pm\ 2\pi\Delta/\lambda_{gw}\ =\ \pm\ \pi \qquad \text{(Equation 4)}$$

where "$\Delta$" is equal to the path length difference between each adjacent waveguide column 564; "$\lambda$"$_{gm}$ is equal to the electromagnetic energy wavelength in the monitor waveguide manifold 90; and where "$\lambda$"$_{gw}$ is equal to the electromagnetic energy wavelength in the waveguide column radiator 80.

Therefore, both "d'" and "$\Delta$" are related to the inter-element spacing "d" and the inclination angle "$\theta$" by the following relationship:

$$d'\ =\ d/\text{Cos}\ (\beta)\ \text{and}\ \lambda\ =\ (d)\ (\tan\ (\theta)) \qquad \text{(Equation 5)}$$

Therefore if we substitute for "d'" and "$\lambda$" in Equation 4, the monitored scanned angles at each end of the manifold 90 may be obtained as follows:

$$\sin\ \theta_{s1}\ =\ \lambda_o\ ((-1/\lambda_{gm}\ \text{Cos}\ (\beta))\ +\ (\text{Tan}\ (\theta)/\lambda_{gw})\ +\ 1/2d)) \qquad \text{(Equation 6)}$$

$$\text{and}\ \sin\ \theta_{s2}\ =\ \lambda_o\ ((1/\lambda_{gm}\ \text{Cos}\ (\beta))\ +\ (\text{Tan}\ (\theta)/\lambda_{gw})\ -\ 1/2d)) \qquad \text{(Equation 7).}$$

Therefore, in order to obtain a monitored scanned angle of 0° relative to the center of array 12 (i.e. "bore sight"), it is required that either Equation 6 or Equation 7 be made equal to 0. This relationship yields the following equation:

$$\text{Tan}\ (\beta)\ =\ \pm\ \lambda_{gw}\ (1/2d\ -\ 1/\lambda_{gm}\ \text{Cos}\ \theta) \qquad \text{(Equation 8).}$$

Since the angle "$\beta$" is normally small, it may be estimated that the Cosine of $\beta$ is approximately equal to 1. This yields the following equation:

$$\text{Tan B}\ \simeq\ \pm\ \lambda_{gw}\ (1/2d\ -\ 1/\lambda_{gm}) \qquad \text{(Equation 9).}$$

In a typical azimuth antenna arrangement 12, "$\lambda$"$_{gw}$ is approximately equal to "$\lambda$"$_{gm}$ and both are approximately equal to 75.85 millimeters. Further, in this typical arrangement, "d" is approximately equal to 35 millimeters. These typical values yield a required angle "B" of approximately ± 4.78° which results in a beam corresponding to monitor angle of approximately 0° being output at one end of the manifold 90 and a beam corresponding to a monitored angle of approximately 7.35° at the other manifold end. Therefore, this inclined travelling waveguide manifold solves the problem of obtaining a bore site monitored angle and additionally, provides a mechanism to obtain relatively any desired monitored angle by inclining the waveguide 90 at some predetermined angle "$\beta$" with respect to the horizon.

While the inclined traveling wave waveguide manifold embodiment, shown in Figure 16, allows a monitored beam, of virtually any desired angle, to be monitored, this monitored beam, and its associated scan angle, is still a function of frequency and temperature induced dimensional variations. That is, the monitored scan angle will vary with modifications in ambient temperature or beam frequency. In a second manifold embodiment, these errors are corrected by exploiting the relationship between the characteristics of the two monitor manifold outputs given in Equations 6 and 7. That is, if Equations 6 and 7 are rewritten for the situation when the manifold 90 is not operating at its design frequency and temperature we obtain the following error Equations:

$$\sin\ \theta'_{s1}\ =\ \lambda'_o\ (-1/(\lambda_{gm}\ \text{Cos}\ (B))\ (1\ -\ E_1)\ +\ (\text{Tan}\ (B)\text{-}/\lambda_{gw})\ (1\ -\ E_2)\ +\ (1/2d)\ (1\ -\ E_3))\ +\ E_4 \qquad \text{(Equation 10)}$$

$$\sin\ \theta'_{s2}\ =\ \lambda'_o\ (1/\lambda_{gm}\ \text{Cos}\ (B)\ (1\ -\ E_1)\ +\ \text{Tan}\ (B)/\lambda_{gw}\ (1\ -\ E_2)\ -\ 1/2d\ (1\ -\ E_3))\ +\ E_4 \qquad \text{(Equation 11)}$$

where:
$E_1$ = error due to a change in "$\lambda_{gm}$"
$E_2$ = error due to a change in "$\lambda_{gw}$"
$E_3$ = error due to a change in "d"
$E_4$ = bias error due to an arbitrary fault condition

For the situation where "B" is approximately equal to 0, it can be seen that the error terms generated by the fault conditions can be isolated by averaging the two monitored output angles denoted as "$\theta'_{s1}$" and "$\theta'_{s2}$". However, when the manifold inclination angle "B" does not equal zero, then the error terms due to the various fault conditions cannot be separated from the frequency and temperature dependent error terms. In order to achieve a frequency and temperature corrected monitored scan angle, it is necessary to introduce a second, identical waveguide manifold inclined at an angle of "-$\beta$". This second embodiment is shown in Figure 17 where a second manifold 566 is inclined at a substantially similar and opposite angle from that of manifold 90. In practice, this manifold angle would be on the opposite face of the antennas 80. Manifold 566 yields the following two monitored scanned angles:

$$\sin \theta'_{s1} = \lambda_o (1/(\lambda_{gm} \text{Cos} (B)) (1 - E_1) - \text{Tan} (B)(1 - E_2)/\lambda_{gw} -(1/2d) (1 - E_3)) + E_4 \quad \text{(Equation 12)}$$

$$\sin \theta'_{s2} = \lambda'_o (-1/(\lambda_{gm} \text{Cos} (B)) (1 - E_1) - \text{Tan} (B)(1 - E_2)/\lambda_{gw} + (1/2d) (1 - E_3)) + E_4 \quad \text{(Equation 13)}$$

Under these conditions, the sine of each the frequency and temperature dependent terms is reversed from the output of manifold 90. Therefore, it is possible to isolate the error(s) introduced by the temperature and frequency fault conditions by averaging the monitor outputs at each end of respective manifolds 90 by use averaging circuit 568 thereby allowing any virtual scanning beam, associated with a desired scan angle to be monitored without the need to constantly modify the manifold in order to correct for temperature and frequency variations. In this dual manifold embodiment, the travelling waveguide manifolds 90 and 566 can therefore be used to provide a self correcting scanning beam monitor which allows the monitoring of a scanning beam corresponding to any general monitored angle direction.

III. Connectorless Energy Coupling

Referring now to Figure 7 there is shown an assembly 570 which comprises a first packaging embodiment of a transmitter controller 74 according to the first embodiment of this invention. Specifically, the transmitter control processor 130 and the transmitter module microwave circuit 132 are, in this embodiment, arranged in a single casing assembly 572. The output of circuit 132 is coupled to a micro-stripline conductor 574 which is then coupled, in a connectorless fashion, to a stripline conductor of one of the combiners 82, 84. This connectorless coupling is inherently more reliable than physically coupling combiners 82 and 84 to transmitter controller 74 since such connectorless coupling obviates the need for additional physical coupling arrangements which may fatigue over time. Additionally, this connectorless coupling arrangement allows for a more efficient transfer of electromagnetic energy since energy is not lost across a physical coupling arrangement. Further, in this embodiment, a second micro-stripline conductor 575 may be utilized to transfer energy from controller 74 to antennas 80 in substantially the same manner as is discussed below.

Referring now to Figures 8 and 9 there is shown a first connectorless coupling embodiment 576 in which the micro strip line 574 is in substantially the same plane as the strip line 584 (utilized by combiners 82, 84). As shown in Figure 8, micro-stripline 574 includes a micro-stripline ground plane 580 and a substrate 582 which is positioned between microstripline 574 and ground plane 580 and which shields line 574 from ground. As further shown, strip line 584 of combiners 82, 84, is normally placed between dielectric substrates 586, 588 each having a respective ground plane 590, 592 on one side thereof. In practice, di-electric substrates 586, 588 could comprise a single substrate with strip line 584 placed therein.

In this first coupling embodiment, an oversized slot 594 is etched in the strip line ground plane 590 corresponding to a second slot 596 which is placed in the micro strip ground plane 580. The use of these two communicating slots 594, 596 allows electromagnetic energy to be transferred from the micro-stripline line 574 to strip line 580 in a relatively efficient manner without the use of physical couplers.

In this coupling embodiment, the width "w" of slot 596 and the respective slot length "L", are selected according to the desired frequency band associated with the energy to be coupled. The slot length "L", is the most critical parameter and is given by the following equation:

$$L_1 = \lambda_o/((2)( \text{ square root of } (E_e - 2 \Delta L))) \quad \text{(Equation 14)}$$

where "$E_e$" is equal to the average of the relative permitivity of the substrate material 582 and the relative pemitivity of the substrate material 586 and where "$\Delta L$" is equal to the difference between the slot length, denoted as "$L_1$" and the feed offset from slot center length, denoted as "$L_2$".

In practice, both the feed offset length "$L_2$" and the tuning stub length "$D_1$" are empirically determined in order to obtain the lowest reflection coefficient in the micro-stripline 574. Similarly, the feed offset of the stripline and the stripline tuning stub length "$D_2$" are empirically determined.

For example, consider the use of a a micro-stripline 574 having a characteristic impedance of 50 ohms, which is to be coupled to a stripline 584 also having a characteristic impedance of 50 ohms and operating at a frequency of approximately 5GH₃. Further, assume that the thickness of substrate 582, denoted as "hm", is approximately 1.5mm; that the thickness of substrate 586, denoted as "hs" is approximately 6mm; that "Es" is substantially equal to "Em" and that both are substantially equal to approximately 3.0; that the width of the micro-stripline 578, denoted as "Wm", is approximately 4.0mm; and that the width of the stripline 584, denoted as "Ws" is approximately 3.9mm.

In this example, and based upon empirical studies, the following dimensions should be employed in order to efficiently couple energy between micro-stripline 574 and stripline 584.

"$L_1$" = 17.0mm

"$L_2$" = 4.0m

"w" = 25mm

"$D_1$" = 9.58mm

"$D_2$" = 8.66mm

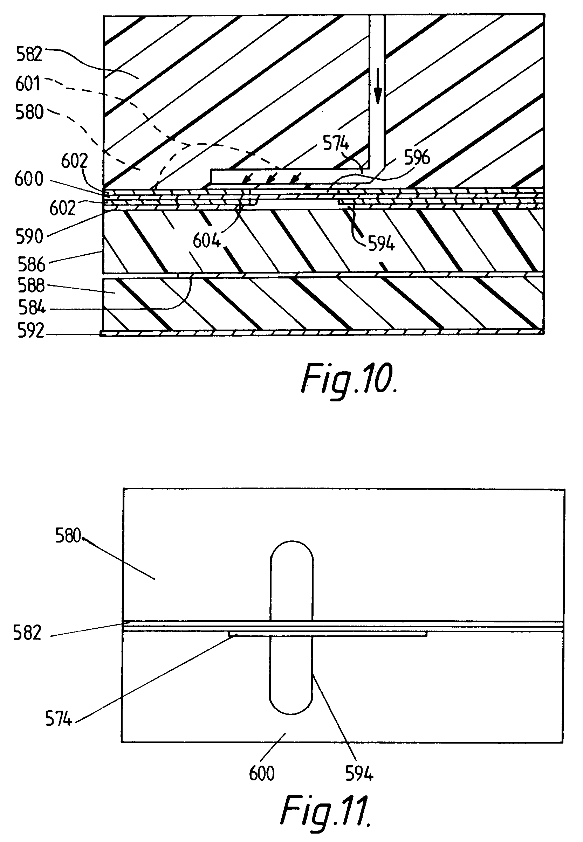

Referring now to Figures 10 and 11 there is shown a second embodiment in which the micro strip line 574 is in a perpendicular plane from that of strip line 584. In this embodiment, an intermediate substrate 600 is utilized and which has a ground plane 602 which is positioned on top of ground plane 590 such that intermediate substrate 600 resides in the same place as stripline 584. A portion 601 of the micro-stripline ground plane 580 is removed from the area in close proximity to slot 596 and, as before, the two communicating slots 596 and 594 allow electromagnetic energy to be transferred between striplines 584 and 574. In this embodiment, such transfer now occurs through slot 604 which is etched into the ground plane 602. Slot 604, in practice should have a width which is substantially similar to the width of slot 596 in order to allow energy to freely pass through slot 596, from micro-stripline 574.

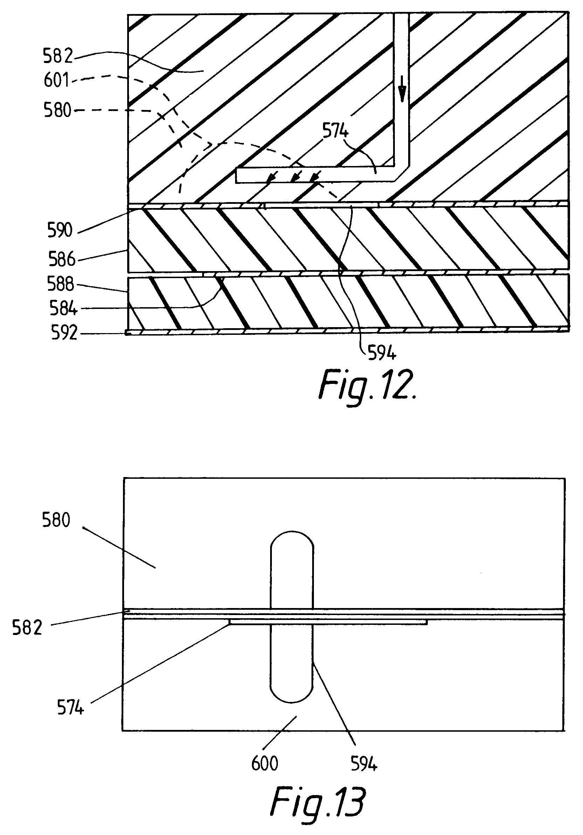

Referring now to Figures 12 and 13 there is shown a third embodiment of the connectorless coupling architecture of the preferred embodiment of this invention. This embodiment differs from that shown in Figures 10 and 11 in that the intermediate substrate 600 is removed from between the micro-stripline and stripline substrates and energy transfer occurs directly through slots 594, 596. This intermediate substrate removal allows for a more efficient electromagnetic energy transfer between stripline conductors 574 and 584.

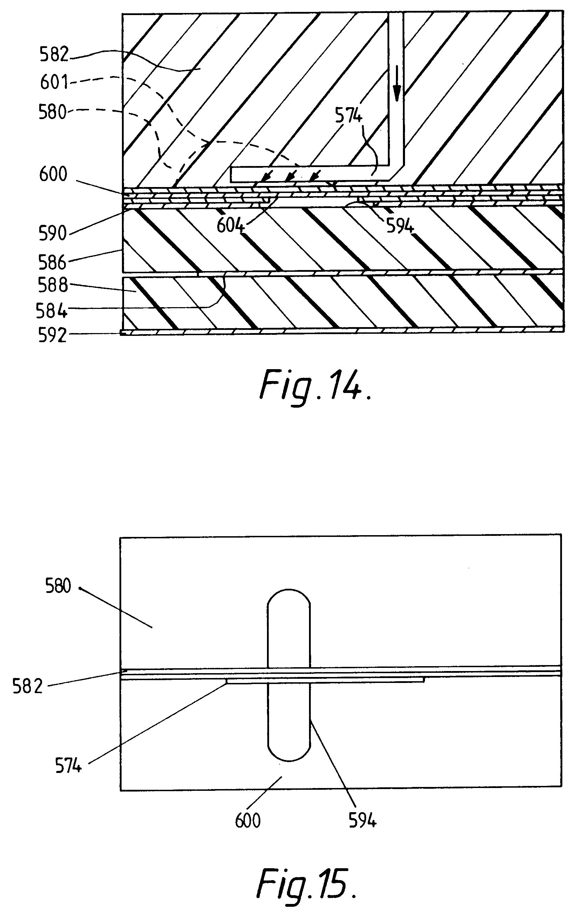

Referring now to Figures 14 and 15 there is shown a fourth embodiment of this connectorless coupling arrangement and which differs from that shown in Figures 10 and 11 in that the ground plane of the micro strip substrate is removed prior to its deployment between ground planes 580 and 590. This embodiment also allows for a more efficient transfer of electromagnetic energy between strip line conductors 574 and 584 without the need for physical coupling arrangement.

It is to be understood that this invention is not limited to the exact construction or method illustrated and described above, but that various changes and modifications may be made without departing from the spirit and scope of the invention as defined in the following subjoint claims.

## Claims

1. An aircraft landing apparatus comprising:

a first antenna;

a second antenna;

a transmitter having an energy output signal associated therewith;

a first transmitter controller having an input receivably coupled to the output signal of said transmitter and being effective to amplify and shift the phase of the received transmitter signal and to couple said amplified and phase shifted transmitter signal to said first antenna; and

a second transmitter controller having an input receivably coupled to the output signal of said transmitter and being effective to amplify and shift the phase of the received transmitter output signal and to couple the amplified and phase shifted signal to said second antenna.

2. The aircraft landing system of claim 1 further comprising:

a second transmitter having a second output signal associated therewith; and

a passive combiner having a first input coupled to said output signal of said transmitter and a second input coupled to said second output signal of said second transmitter and effective to selectively couple one of said output signals from said transmitter and said second transmitter to each of said first and second transmitter controllers.

3. The aircraft landing system of claim 1 further comprising:

a fault monitor, coupled to said transmitter and adapted to detect a transmitter fault and to output a fault detection signal in response to said detected fault.

4. The aircraft landing system of claim 3 further comprising:

a second fault monitor, coupled to said transmitter and adapted to detect a transmitter fault and to output a fault detection signal, in response to said detected fault;

a third fault monitor, coupled to said transmitter and adapted to detect a transmitter fault and to output a fault detection signal in response to said detected fault; and

voting means for receiving said fault detection signal from each of said fault monitor, said second fault monitor, and from said third fault monitor and for preventing said coupling of said transmitter output signal to said first and second transmitter controllers after receipt of a fault detection signal from at least two of said fault monitors.

5. An aircraft landing system comprising:

(a) an azimuth radiating apparatus having a plurality of radiating elements which are effective to radiate energy in a desired azimuth direction; first and second transmitters, each of said transmitters being effective to generate an energy output signal therefrom; and a plurality of transmitter controllers, each of said transmitter controllers having an output which is uniquely coupled to one of said radiating elements and each of said transmitter controllers further being adapted to selectively receive said output signal from one of said first and second transmitters and to amplify and shift the phase of said received transmitter output signal and to couple said phase shifted and amplified signal to said respective unique one of said radiating elements thereby allowing said radiating elements to cooperatively radiate a scanning beam of energy in a desired azimuth direction; and

(b) an elevation radiating apparatus having a plurality of radiating elements which are effective to radiate energy in a desired elevational direction; first and second transmitters, each of said transmitters being effective to generate an energy output signal therefrom; and a plurality of transmitter controllers each having an output which is uniquely coupled to one of said radiating elements, and each of said transmitter controllers further being adapted to selectively receive said output signal from one of said first and second transmitters and to amplify and to shift the phase of said received transmitter output signal and to couple said phase shifted and amplified signal to said respective unique one of said radiating elements thereby allowing said radiating elements to cooperatively radiate a scanning beam of energy in a desired elevational direction.

6. The aircraft landing system of claim 5 wherein said azimuth radiating apparatus comprises:

a travelling wave manifold coupled to said radiating elements at a pre-selected angle with respect to the horizon and adapted to receive said scanning beam of energy and to output a portion of said scanning beam of energy, defined by said pre-selected angle and uniquely corresponding to a certain beam scan angle.

7. The aircraft landing system of claim 6 wherein said azimuth radiating apparatus further comprises:

a second travelling wave manifold coupled to said radiating elements at a second pre-selected angle with respect to the horizon and adapted to receive said scanning beam of energy and to output a portion of said received energy, defined by said second pre-selected angle and uniquely corresponding to a second certain beam scan angle; and

means, coupled to said output of said first and second travelling wave manifold, for preventing said portion of said received energy, uniquely corresponding to said certain beam scan angle, to vary in response to ambient temperature variations.

8. The aircraft landing system of claim 5 further comprising:

a passive combiner coupled to said plurality of transmitter controllers and adapted to selectively allow said output signal from each of said transmitters to be coupled to each of said plurality of said transmitter controllers; and

a data radiating element adapted to selectively radiate data therefrom;

a plurality of out of coverage radiating elements adapted to radiate energy over a predefined spatial area; and

switch means, coupled to said first and second transmitters, to said passive combiner, to said data radiating element, and to said plurality of out of coverage radiating elements for selectively allowing one of said transmitter output signals to be coupled to said passive combiner for a first pre-determined period of time, to said radiating element for a second pre-determined period of time, and to each of said plurality of out of coverage radiating elements for a third pre-determined period of time.

9. The aircraft landing system of claim 5 further comprising:

a plurality of fault monitors, each coupled to said first and second transmitters and each of said fault monitors being adapted to determine the existence of a transmitter fault and to output a fault detection signal upon determining said existence of said fault;

voting means, coupled to each of said plurality of fault monitors, for receiving each of said respective fault detection signals from each of said plurality of fault monitors and for outputting a transmitter inhibition signal only upon receipt of at least two of said fault detection signals; and

transmitter inhibition means, coupled to said voting means, for receiving said transmitter inhibition signal and for preventing one of said first and second transmitters from generating said energy output signal therefrom.

**10.** A transmitter controller for use in an aircraft landing system in which an electrical energy signal is generated by a transmitter and is radiated by a plurality of antennas, said transmitter controller comprising:

a phase shifter adapted to receive and shift the phase of said generated electrical energy signal and to output said phase shifted energy signal therefrom;

an amplifier to receive and amplify said phase shifted energy signal output from said phase shifter and to output said amplified and phase shifted energy signal therefrom;

a switch adapted to allow said amplified and phase shifted energy signal to be selectively input to and radiated from one to two of said plurality of antennas;

an isolator, coupled to said switch and adapted to receive an inhibition signal and, upon receipt of said signal, to prevent said amplified and phase shifted signal from being input to said switch; and

controller means, coupled to said phase shifter, to said amplifier, to said switch, and to said isolator, for defining an amount of phase shift to be imparted to said generated and received electrical energy signal, for defining an amount of amplification to be imparted to said phase shifted energy signal, for designating one of said two antennas to receive said amplified and phase shifted energy signal from said switch, and to generate said inhibition signal effective to allow said isolator to prevent said amplified and phase shifted energy signal from being input to said switch for a predetermined period of time.

**11.** A beam monitoring apparatus for use in combination with an array of antennas which cooperatively radiate a scanning beam of energy, said monitoring apparatus comprising:

a travelling wave waveguide mounted upon said antenna array and defining an angle with respect to the horizon, said waveguide being adapted to receive said scanning beam of energy and to output a portion of said scanning beam of energy therefrom, said portion of said scanning beam of energy being defined by said angle and uniquely corresponding to a certain beam scan angle.

**12.** The beam monitoring apparatus of claim 11 further comprising:

a second travelling wave waveguide mounted upon said antenna array defining a second angle with respect to the horizon, said second angle being substantially equal to and opposite from said first angle, said second travelling wave waveguide being adapted to receive said scanning beam of energy and to output a second portion of said scanning beam of energy therefrom, said second portion being defined by said second angle and further uniquely corresponding to a second and certain beam scan angle; and

compensation means, coupled to said output of said first and second travelling wave waveguides, for substantially preventing variations of said scanning beam output portion.

**13.** An energy coupler comprising:

a first electrical conductor receivably coupled to a source of electrical energy and disposed within a first di-electric substrate, said substrate having a first surface covered by a first electrically conductive ground plane and further including a second and opposite surface having all but a first portion thereof covered by a second electrically conductive ground plane; and

a second electrical conductor disposed upon a first surface of a second di-electric substrate, said substrate including a second and opposite surface having all but a second portion thereof covered by a third electrically conductive ground plane, said second portion further being disposed in close proximity to said first portion thereby allowing electrical energy, received by said first electrical conductor, to be transmitted through said first and said second portions to said second electrical conductor.

Fig. 1.

EP 0 516 265 A1

Fig. 2.

INPUT

R1

R2

RN

112

OUTPUT

102

114

FIXED
LOAD

103

## Fig.3.

74

R/F
INPUT

TRANSMITTER MODULE
MICROWAVE CIRCUIT

DATA / OCI /
SCANNING
BEAM OUTPUT

132

134

136

130

158

MEMORY

TRANSMITTER
CONTROL
PROCESSOR

INPUT SIGNALS

## Fig.4.

Fig. 5.

132

DATA/OCI

AMP #1 — 148

SCANNING BEAM OUTPUT

150 — AMP #2

SWITCH — 146

ISOLATOR — 144

GAIN CONTROL — 142

PHASE SHIFTING DEVICE — 140

R/F INPUT

122, 124

134

FROM CONTROLLER - 130

Fig.6.

TO TRANSMIT MODULE MICROWAVE CIRCUIT -132

178 COMMUNICATIONS RECEIVER INTERFACE

160 NON-LINEAR CLOCK GEN.

158 BEAM STEERING CONTROL AND ALIGNMENT CONTROLLER

298 COUNTER

166 R/F POWER CONTROLLER

136 MEMORY

156 PHASE CONTROLLER

SYNCHRONIZATION

SYNCHRONIZATION RECEIVER 170

152 SEQUENCE TIMING GENERATOR

DPSK DATA SEQUENCE GENERATOR

168 SYNCHRONIZATION MONITOR

154

FROM VOTING CIRCUIT -118

172 SYNCHRONIZATION GENERATOR

164 SELECT

TO VOTING CIRCUIT -118

176 MONITOR

CLOCK

174 CLOCK RECEIVER

TO VOTING CIRCUITRY -118 TRANSMITTERS -52, 54

130

EP 0 516 265 A1

Fig.7.

Fig. 8.

Fig. 9.

582
601
580
602
600
602
590
586
588
584
592

574
596
604
594

*Fig.10.*

580
582
574

600    594

*Fig.11.*

582
601
580

574

590
586
588
584
592

594

## Fig.12.

580

582

574

600        594

## Fig.13

582
601
580
600
590
586
588
584
592

574
604
594

## Fig.14.

580
582
574
600
594

## Fig.15.

Fig.16A.

Fig.16B.

Fig.17.

```
┌─────────────────────┐      ┌─────────────────────┐
│   RECEIVE/GENERATE   │      │   RECEIVE/GENERATE   │
│  A FIRST SYNCHRONIZATION │──│      A SECOND        │
│       SIGNAL         │      │ SYNCHRONIZATION SIGNAL│
└─────────────────────┘      └─────────────────────┘
     182                              184

        ┌─────────────────────┐
        │  VERIFY SYNC SIGNALS │── 186
        └─────────────────────┘
                                        180
        ┌─────────────────────┐
        │   DEFINE A FIRST     │── 188
        │     CYCLE TIME       │
        └─────────────────────┘

        ┌─────────────────────┐
        │ DEFINE A SET OF SECOND│── 190
        │     CYCLE TIMES      │
        └─────────────────────┘

        ┌─────────────────────┐
        │ SELECT APPROPRIATE   │── 192
        │    MEMORY FIELD      │
        └─────────────────────┘

        ┌─────────────────────┐
        │  PAUSE FOR A 1ST PRE-│── 194
        │ DEFINED PERIOD OF TIME│
        └─────────────────────┘

        ┌─────────────────────┐
        │ TRANSMIT PREAMBLE DATA│── 196
        └─────────────────────┘

        ┌─────────────────────┐
        │  PAUSE FOR A 2ND PRE-│── 198
        │ DEFINED PERIOD OF TIME│
        └─────────────────────┘

  200 ─┤ TRANSMIT OCI │        202

        ┌─────────────────────┐
        │   PAUSE FOR A 3RD    │
        │ PRE-DEFINED PERIOD OF TIME│
        └─────────────────────┘
                                    210      212      214
  204 ─┤ BEAM SCANNING │  206   ┌───────┐ ┌───────┐  ╱FAIL╲ YES
                                │MONITOR│─│COMPARE│──│  ?  │
        ┌─────────────────────┐ └───────┘ └───────┘  ╲___╱
        │  PAUSE FOR A 4TH PRE-│                        NO
        │ DEFINED PERIOD OF TIME│
        └─────────────────────┘

        ┌─────────────────────┐                  ┌──────────────┐
        │ TRANSMIT DATA DURING │          218 ──│ TURN MODULE  │
        │  SECOND CYCLE TIMES  │── 208           │     OFF      │
        └─────────────────────┘                  └──────────────┘

            ╱ IS THE ╲  ── 216                   ┌──────────────┐
      NO   ╱  FIRST   ╲                    220 ──│   GENERATE   │
      ─────│   CYCLE   │                         │     FLAG     │
            ╲TIME COMPLETE╱                       └──────────────┘
             ╲    ?    ╱
                YES                              ┌──────────────┐
                                          224 ──│  WAIT FOR    │
                        Fig.18.                 │    RESET     │
                                                └──────────────┘
```

Fig.18.

READ FIRST WORD IN A FIRST PORTION OF MEMORY — 228

DEFINE PREAMBLE TRANSMISSION TIME BY USE OF FIRST WORD — 230

SELECT OUTPUT PORT OF TRANSMITTER CONTROLLER — 232

SELECT APPROPRIATE DATA ANTENNA — 234

GENERATE R/F ENABLE SIGNAL TO SOURCE — 235

GENERATE FIRST BIT OF DPSK DATA SEQUENCE — 236

USE GENERATED BIT TO ADDRESS MEMORY — 238

READ DATA FROM ADDRESSED MEMORY PORTION AND TRANSFER TO BEAM STEERING AND CONTROL APPARATUS — 240

OUTPUT DATA TO TRANSMITTER MODULE MICROWAVE CIRCUIT FOR TRANSMISSION — 242

IS TRANSMISSION TIME COMPLETED ? — 244

YES → PAUSE FOR A 2ND PRE-DEFINED PERIOD OF TIME — 198

NO → GENERATE NEXT BIT OF DPSK DATA SEQUENCE — 246

226

Fig.19.

39

Fig.20a

A

READ A THIRD WORD
IN THE SECOND
PORTION OF MEMORY — 276

DEFINE RIGHT OCI
TRANSMISSION TIME BY — 278
USE OF THIRD WORD

SELECT OUTPUT PORT
TRANSMITTER CONTROLLER — 280

SELECT APPROPRIATE
OCI ANTENNA — 282

GENERATE R/F ENABLE
SIGNAL TO SOURCE — 284

286 — GENERATE OCI
TRANSMISSION

288
IS
TRANSMISSION
TIME
COMPLETED
? — NO

YES

PAUSE FOR A THIRD
PREDETERMINED PERIOD — 284
OF TIME

*Fig.20b*

41

292 — READ FIRST WORD IN
A THIRD PORTION OF MEMORY

290

294 — SELECT LOW POWER OUTPUT

296 — INITIALIZE THE BEAM
STEERING COUNTER

300 — READ THE FIRST WORD IN
THE THIRD PORTION OF MEMORY

302 — DEFINE PERIOD OF
NON-LINEAR CLOCK BY USE
OF THIS WORD

304 — GENERATE CLOCK

306 — READ NEXT WORD

308 — DEFINE PHASE SHIFTING CODE
BY USE OF NEXT WORD

310 — IS
THIRD
PORTION
COMPLETED
?

NO

312 — READ NEXT
WORD

314 — YES

"TO" SCAN IS DONE

322 — SELECT LOW
POWER OUTPUT

316 — PAUSE FOR A PREDEFINED
PERIOD OF TIME

324 — INITIALIZE THE BEAM
STEERING COUNTER

318 — DISABLE R/F
ENABLE LINE

326 — READ THE FIRST
WORD IN THE
FORTH PORTION
OF MEMORY

320 — READ FIRST OR NEXT WORD IN
FOURTH PORTION OF MEMORY

Ⓐ

*Fig.21a*

Ⓐ

328 — DEFINE PERIOD OF
NON-LINEAR CLOCK BY
USE OF READ WORD

330 — GENERATE CLOCK

332 — READ NEXT WORD

334 — DEFINE PHASE SHIFTING CODE
BY USE OF NEXT WORD

336 — IS
FOURTH
PORTION
COMPLEATED
?

NO → 338 READ NEXT
WORD

YES

340 — "FRO" SCAN IS
DONE

341 — IS NEXT
TRANSMISSION
DATA
?

YES → 208 TRANSMIT DATA DURING
SECOND CYCLE TIMES

NO

192 — SELECT APPROPRIATE
MEMORY FIELD

Fig.21b

43

TO SECOND TRANSMITTER-54

TO CONTROLLER -348

TO CONTROL AND STATUS -103

52

362

CHANGEOVER MODULE

DETECTOR

TO CONTROL AND STATUS MODULE-103 AND MONITORS- 92, 94, 96

350          352          354          358

SYNTHESIZER → MAIN SWITCH → AUXILIARY SWITCH → AMP

356

TO COMBINER -58

342

FREQ. REF. 1

CONTROLLER 348

TO TRANSMIT CONTROLLER -74

10 MHZ COMPARATOR 346

FREQ. REF. 2

360

344

AUXILIARY SHUTDOWN CONTROLLER

FROM EXECUTIVE MONITORS- 92, 94, 96

FROM TRANSMIT CONTROLLERS -74

FROM AIC-420

Fig.22.

EP 0 516 265 A1

Fig.23.

Fig.24.

SYNCHRONIZATION

R/F ENABLE

DEMODULATED DATA

[ MANIFOLD / OCI / FEILD MONITOR / SOURCE INPUTS ]

92

MULTIPLEXER/AMPLIFICATION — 408

414

SAMPLE/HOLD — 410

A/D CONVERTOR — 416

SHUTDOWN CONFIRMATION

BEAM PROCESSOR AND POWER MONITOR — 412

TIMING MONITOR — 418

MEM — 464

AUTOMATIC INTEGRITY CHECKING DEVICE — 420

D/A CONV. AND AMPLICATION DEVICE — 422

SHUTDOWN CONTROLLER — 424

100

RESET

SHUTDOWN /ALARM

TO CONTROL/ STATUS MODULE - 102

EP 0 516 265 A1

*Fig.25.*

SAMPLE INPUT SIGNALS — 428

COMPUTE RAW ANGLE ERROR — 432

SLIDING WINDOW INTEGRATION — 434

COMPUTE MEAN ANGLE ERROR — 435

COMPARISON — 436

426

GOOD — VOTING — 438

BAD

DEACTIVATE SOURCE — 440

442 — RECEIVE CONFIRMATION

446 — RECEIVE COMFIRMATION ? — YES — CHECK POWER — 448

450 — POWER OFF ? — NO — AUXILIARY SHUTDOWN — 452

POWER OFF ? — YES

NO

456 — AUXILIARY SHUTDOWN

458 — CHECK POWER

460 — POWER OFF ? — YES — WAIT FOR RESET — 454

NO

462 — GENERATE ALARM

*Fig. 26.*

48

INITIATE END TO
END TEST — 468

466

INITIATE AUTOMATIC
INTEGRITY CHECK (FAILURE) — 470

INHIBIT PRIMARY SHUTDOWN — 472

DETECT ABSENCE OF SHUTDOWN — 474

INITIATE AUXILIARY
SHUTDOWN — 476

RECEIVE CONFIRMATION — 478

WAIT FOR RESET
COMMAND — 480

*Fig.27.*

Fig. 28.

Fig. 29.

*Fig.30.*

*Fig.31.*

*Fig. 32.*

CHANNEL
SELECT

DPSK
DATA

ACTIVATION

484

MULTI-CHANNEL
SYNTHESIZER
524

DPSK
MODULATOR
528

SWITCH
530

OSCILLATOR 520

532

DPSK
DEMODULATOR

TO MONITOR

Fig.33.

504

INPUT
DATA

534

CONTROLLER

TDM SEQUENCE
MEMORY STORAGE 536

BEAM STEERING
MEMORY STORAGE 538

NON-LINEAR
CLOCK 540

LINEAR
CLOCK 542

OUTPUT

Fig.34.

*Fig. 35.*

*Fig. 36.*

European Patent Office

**EUROPEAN SEARCH REPORT**

Application Number

EP 92 30 1906

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| P,A | EP-A-0 433 161 (THOMSON-CSF) <br> * figure 2; column 3, line 50 - column 4, line 44 * <br> --- | 1,8 | G 01 S 1/56 <br> G 01 S 1/02 |
| A | IEEE TRANSACTIONS ON ANTENNAS AND PROPAGATION vol. 37, no. 4, April 1989, pages 418-425, New York, US; D.M. POZAR: "Analysis of an Infinite Phased Array of Aperture Coupled Microstrip Patches" <br> * page 418; figure 1; column 1 * <br> --- | 13 | |
| A | EP-A-0 293 099 (HAZELTINE) <br> * figure 1; abstract * <br> --- | | |
| A | EP-A-0 335 303 (STANDARD ELEKTRIK LORENZ) <br> * figure 1; abstract * <br> ----- | | |

TECHNICAL FIELDS SEARCHED (Int. Cl.5)

G 01 S

The present search report has been drawn up for all claims

| Place of search | Date of completion of the search | Examiner |
|---|---|---|
| BERLIN | 14-08-1992 | BREUSING J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)